# EUROPEAN PATENT APPLICATION

(11) **EP 4 475 587 A1**
(43) Date of publication of application: **11.12.2024**
(21) Application number: 22923957.9
(22) Date of filing: 31.01.2022
(51) Int. Cl.: H04W 24/10, H04W 76/15, H04W 76/19, H04W 76/22

(54) **WIRELESS COMMUNICATION DEVICE, COMMUNICATION METHOD, AND COMMUNICATION PROGRAM**

(71) Applicant: FUJITSU LIMITED, Kawasaki-shi, Kanagawa 211-8588 (JP)
(72) Inventor: HORI, Takako, Kawasaki-shi, Kanagawa 211-8588 (JP); OHTA, Yoshiaki, Kawasaki-shi, Kanagawa 211-8588 (JP)
(74) Representative: Haseltine Lake Kempner LLP
(86) International application number: PCT/JP2022/003693
(87) International publication number: WO 2023/145094

(57) **Abstract**

A radio communication apparatus (200) includes a transmission unit (240) that transmits a message to a different radio communication apparatus (100), and a processing unit (210) that performs a process on the message that is transmitted by the transmission unit (240), where the processing unit, when including a first parameter in a first Radio Resource Control (RRC) message that is to be transmitted to the different radio communication apparatus (100) and including a second parameter in a first Data Radio Bearer (DRB) configuration parameter that is included in the first RRC message, includes a third parameter in the first DRB configuration parameter.

## Description

### Technical Field

The present invention relates to a radio communication apparatus, a communication method, and a communication program.

### Background Art

In current networks, a network for radio communication using a mobile terminal (a smartphone or a feature phone) or the like is being expanded, and there is a need for an increase in a speed and a capacity of the radio communication. As a technology for increasing the speed and the capacity, Dual Connectivity (DC) is known. DC is a technology in which a terminal device is wirelessly connected to a plurality of base station devices including a master base station device and a secondary base station device and performs radio communication by using a carrier (hereinafter, may be referred to as a "cell group") of each of the base station devices.

Further, with the advancement of generations of radio communication standards, for example, Multi Radio Dual Connectivity (MR-DC) is attracting attention that is a DC technology using eNodeB (hereinafter, may be referred to as an "eNB"), which is a base station device corresponding to Evolved Terrestrial Radio Access (E-UTRA) that is a Radio Access Technology (RAT) for 3.9G, 4G (Fourth-Generation), and 4G-advanced, and using gNodeB

(hereinafter, may be referred to as "gNB"), which is a base station device corresponding to New Radio (NR) that is a Radio Access Technology for 5G (Fifth-Generation) and 5G-Advanced. Meanwhile, MR-DC includes DC in which both of the master base station device and the secondary base station device are gNBs.

In MR-DC, the terminal device transmits and receives data to and from both of the master base station device and the secondary base station device when, for example, an amount of data to be transmitted and received is large. In contrast, it is examined that, in MR-DC, when the amount of data to be transmitted and received is small, the terminal device suspends transmission and reception of data to and from the secondary base station device by deactivating (deactivation) of the cell group (secondary cell group) that belongs to the secondary base station device to save power, for example.

### Citation List

### Patent Literature

Non Patent Literature 1: 3GPP TS38.300 V16.8.0 (2021-12)
Non Patent Literature 2: 3GPP TS37.340 V16.8.0 (2021-12)
Non Patent Literature 3: 3GPP R2-2111638, "Introduction of efficient SCG activation/deactivation", 1-12 November 2021

### Summary of invention

### Technical Problem

However, a procedure in which the base station device causes the secondary cell group of the terminal device to enter a deactivated state or an activated state is not determined as standardized specifications. Further, for example, when the secondary cell group of the terminal device is in the deactivated state, and if transmission of control data in each of protocols occurs, it is needed to cause the secondary cell group to enter the activated state and transmit the control data, so that unwanted electric power is consumed, which is a problem.

The disclosed technology is conceived in view of the foregoing situations, and an object of the disclosed technology is to provide a radio communication apparatus, a communication method, and a communication program capable of prevent an increase of unwanted power consumption. Solution to Problem

According to an aspect of an embodiment, a radio communication apparatus includes a transmission unit configured to transmit a message to a different radio communication apparatus, and a processing unit configured to perform a process on the message that is transmitted by the transmission unit, wherein the processing unit, when including a first parameter in a first Radio Resource Control (RRC) message that is to be transmitted to the different radio communication apparatus and including a second parameter in a first Data Radio Bearer (DRB) configuration parameter that is included in the first RRC message, includes a third parameter in the first DRB configuration parameter.

### Advantageous Effects of Invention

According to one embodiment of the radio communication apparatus, the communication method, and the communication program disclosed in the present application, it is possible to prevent an increase of unwanted power consumption.

### Brief Description of Drawings

FIG. 1 is a diagram illustrating a configuration example of a communication system.
FIG. 2 is a block diagram illustrating a configuration example of a base station device.
FIG. 3 is a block diagram illustrating a configuration example of a terminal device.
FIG. 4 is a diagram illustrating an example of a protocol stack for a U-Plane.
FIG. 5 is a diagram illustrating an example of a protocol stack for a C-Plane.
FIG. 6 is a diagram illustrating a specific example of parameters of an RRC message.
FIG. 7 is a diagram illustrating a specific example of parameters of an RRC message.
FIG. 8 is a diagram illustrating a configuration example of a cell group of the communication system.
FIG. 9 is a diagram for explaining types of MR-DC.
FIG. 10 is a diagram for explaining synchronized reconfiguration.
FIG. 11 is a diagram for explaining transmission of an end-marker control PDU.
FIG. 12 is a sequence diagram illustrating operation of transition to SCG deactivation.
FIG. 13 is a sequence diagram illustrating RRC message transmission-reception operation in an SCG deactivating state.
FIG. 14 is a sequence diagram illustrating SCG reactivation operation.
FIG. 15 is a diagram illustrating a specific example of a mode transition.
FIG. 16 is a sequence diagram illustrating RRC message transmission-reception operation while a radio bearer is being suspended.
FIG. 17 is a sequence diagram illustrating RRC message transmission-reception operation for controlling uplink transmission.

### Description of Embodiments

Embodiments of a radio communication apparatus, a communication method, and a communication program disclosed in the present application will be described in detail below with reference to the drawings. Problems and embodiments described in the present application are mere examples and do not limit the scope the present application. In particular, even when the embodiments are described by different expressions, as long as the embodiments are technically equivalent, the technology of the present application can be applied to each of the embodiments and the description below do not limit the scope of the invention.

### Configuration example of communication system

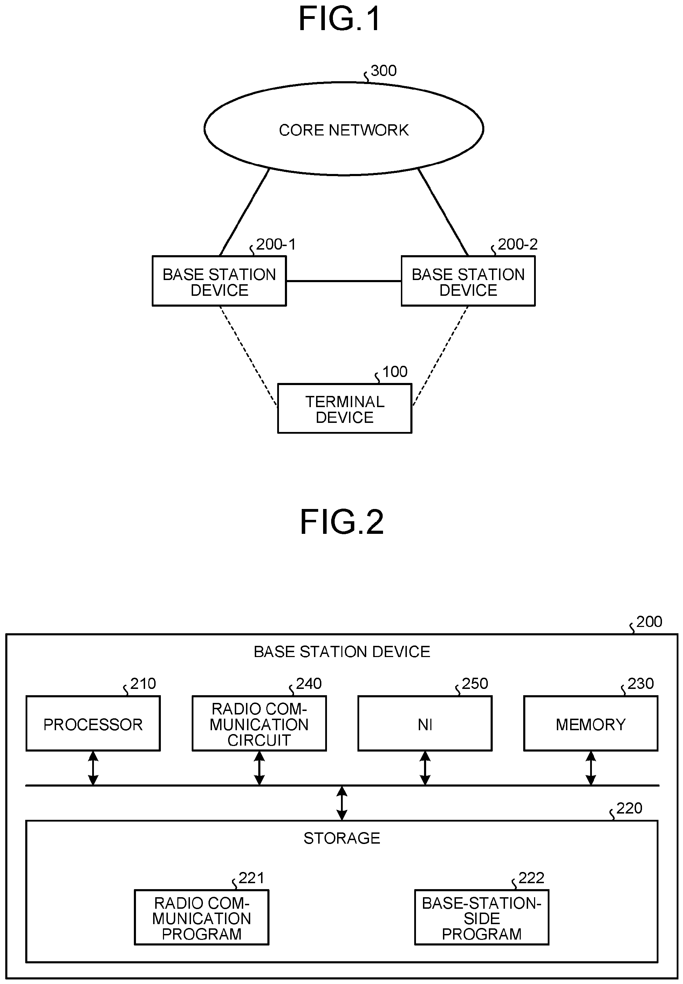

FIG. 1 is a diagram illustrating a configuration example of a communication system. The communication system illustrated in FIG. 1 includes a terminal device 100, base station devices 200-1, 200-2, and a core network 300. The communication system may be a radio communication system in which the terminal device 100 communicates with the base station device 200-1 or the base station device 200-2, or may be a radio communication system in which the terminal device 100 communicates with the base station device 200-1 and the base station device 200-2 by MR-DC. For example, when communication is performed by MR-DC, the base station device 200-1 serves as a master base station device and the base station device 200-2 serves as a secondary base station device. Hereinafter, in some cases the master base station device may be referred to as Master Node (MN) and the secondary base station device may be referred to as Secondary Node (SN).

The terminal device 100 wirelessly connects to one or both of the base station devices 200-1 and 200-2, and performs radio communication. A Radio Access Technology (RAT) that provides radio connections is, for example, E-UTRA or NR. The terminal device 100 is a terminal or a smartphone that is compliant with one or both of E-UTRA and NR.

The base station devices 200-1 and 200-2 (hereinafter, may collectively be referred to as a "base station device 200") are radio communication apparatuses that wirelessly connect to the terminal device 100 and perform radio communication. Further, the base station devices 200-1 and 200-2 are connect to each other by a wire and communicate with each other, for example. The base station device 200 is connected to the core network 300 by a wire and perform communication, for example. The base station device 200 corresponds to one of eNodeB, which is adopted when E-UTRA is used as the RAT, and gNodeB, which is adopted when NR is used as the RAT, for example.

The core network 300 is a network that is compliant with any generation of a mobile communication system. In other words, the core network 300 may be, for example, a core network (hereinafter, may be referred to as "5GC") that is compliant with 5G, an Evolved Packet Core (EPC) that is compliant with 4G, or the like.

Details of MR-DC that is implemented by the communication system configured as described above will be described later.

### Configuration example of base station device 200

FIG. 2 is a block diagram illustrating a configuration example of the base station device 200. The base station device 200 is a communication device or a relay device that includes a processor 210, a storage 220, a memory 230, a radio communication circuit 240, and a Network Interface (NI) 250.

The storage 220 is an auxiliary storage device, such as a flash memory, a Hard Disk Drive (HDD), or a Solid State Drive (SSD), for storing a program or data. The storage 220 stores therein a radio communication program 221 and a base-station-side program 222.

The memory 230 is an area onto which the program that is stored in the storage 220 is loaded. Further, the memory 230 may be used as an area in which the program stores data.

The radio communication circuit 240 is a circuit that is wirelessly connected to the terminal device 100 and performs communication. The base station device 200 receives a signal that is transmitted from the terminal device 100 and transmits a signal to the terminal device 100 via the radio communication circuit 240.

The NI 250 is a communication device that is connected to the different base station device 200 and realizes communication between the base stations, for example. Further, the NI 250 is a communication device that is connected to the core network 300 (a communication device included in the core network 300) and performs communication, for example. As the NI 250, for example, a Network Interface Card (NIC) may be used. The base station device 200 receives a signal that is transmitted from a different communication apparatus and transmits a signal to the different communication apparatus via NI 250.

The processor 210 includes, for example, a Central Processing Unit (CPU) or the like, loads the program that is stored in the storage 220 onto the memory 230, executes the loaded program, constructs each of the processing units, and implements various processes.

Specifically, the processor 210 performs a radio communication process by executing the radio communication program 221. The radio communication process is a process of wirelessly connecting to the terminal device 100, performing radio communication with the terminal device 100, and relaying communication between the terminal device 100 and a different communication apparatus.

Further, the processor 210 constructs a transmission unit, a reception unit, and a processing unit by executing the base-station-side program 222 and performs a base-station-side process. Meanwhile, when the base station device 200 communicates with the terminal device 100 by using MR-DC, the base-station-side process may include an MR-DC master node process and an MR-DC secondary node process. In this case, the MR-DC master node process is a process of controlling a master node side in MR-DC, and the MR-DC secondary node process is a process of controlling a secondary node side in MR-DC. The base station device 200 performs communication corresponding to each type of MR-DC (to be described later) in the MR-DC master node process and the MR-DC secondary node process.

### Configuration example of terminal device 100

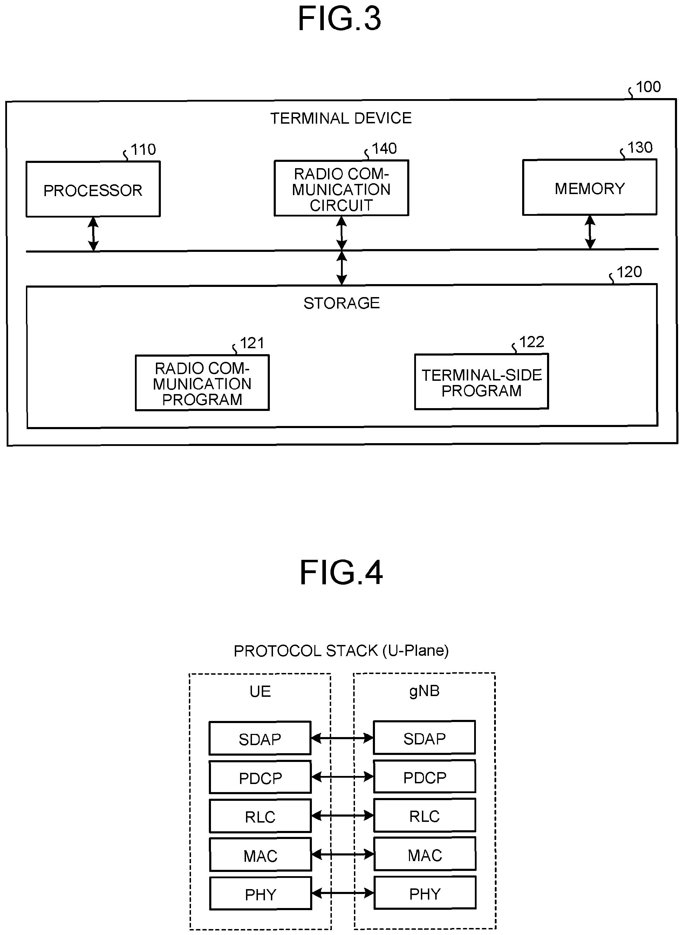

FIG. 3 is a block diagram illustrating a configuration example of the terminal device 100. The terminal device 100 is a communication apparatus that includes a processor 110, a storage 120, a memory 130, and a radio communication circuit 140.

The storage 120 is an auxiliary storage device, such as a flash memory, an HDD, or an SSD, for storing a program or data. The storage 120 stores therein a radio communication program 121 and a terminal-side program 122.

The memory 130 is an area onto which the program that is stored in the storage 120 is loaded. Further, the memory 130 may be used as an area in which the program stores data.

The radio communication circuit 140 is a circuit that is wirelessly connected to the base station device 200 and performs communication. The terminal device 100 receives a signal that is transmitted from the base station device 200 and transmits a signal to the base station device 200 via the radio communication circuit 140. As the radio communication circuit 140, for example, a network card compliant with radio communication may be used.

The processor 110 loads the program that is stored in the storage 120 onto the memory 130, executes the loaded program, constructs each of the processing units, and implements various processes.

Specifically, the processor 110 performs a radio communication process by executing the radio communication program 121. The radio communication process is a process of wirelessly connecting to the base station device 200, performing radio communication with the base station device 200, and communicating with a different communication apparatus via the base station device 200.

Further, the processor 110 constructs a transmission unit, a reception unit, and a processing unit by executing the terminal-side program 122 and performs a terminal-side process. Meanwhile, when the terminal device 100 communicates with the base station device 200 by using MR-DC, the terminal-side process may include a terminal-side MR-DC process. In this case, the terminal-side MR-DC process is a process of controlling communication in MR-DC. The terminal device 100 performs communication corresponding to each type of MR-DC (to be described later) in the terminal-side MR-DC process.

### Protocol Stack

Examples of a protocol stack in the communication system will be described below. In the communication system, a hierarchical structure of a series of protocols for transmission and reception of data is referred to as a protocol stack. In the following, a case will be described in which the base station device 200 is an eNB or a gNB and the core network 300 is an EPC or a 5GC. Further, it is assumed that the terminal device 100 (User Equipment (UE)) is complaint with one or both of E-UTRA and NR.

Protocol stacks for a User Plane (U-Plane) and a Control Plane (C-Plane) will be described below. The U-Plane corresponds to, for example, a data signal (message) of user data to be transmitted and received. The C-Plane corresponds to, for example, a control signal (message) to be transmitted and received in communication.

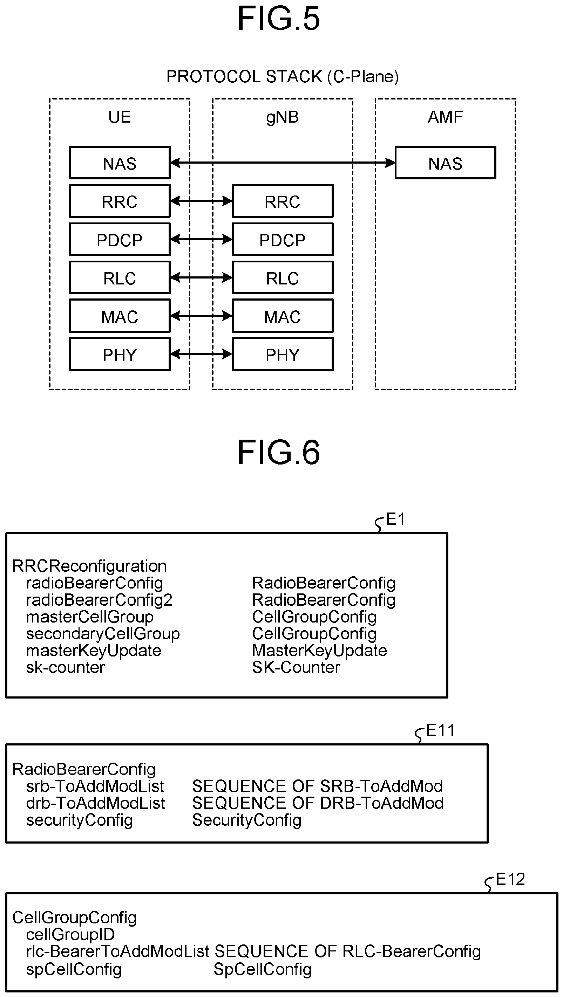

FIG. 4 is a diagram illustrating an example of a protocol stack for a U-Plane when the core network 300 is a 5GC. Further, FIG. 5 is a diagram illustrating an example of a protocol stack for a C-Plane when the core network 300 is a 5GC. In FIG. 4 and FIG. 5, SDAP, PDCP, RLC, MAC, PHY, NAS, and RRC represent names of respective layers. Hereinafter, in some cases, each of the SDAP, the PDCP, the RLC, the MAC, the PHY, the NAS, and the RRC may be added with a sublayer or a layer and referred to as, for example, an "SDAP sublayer", an "SDAP layer", or the like. Furthermore, in some cases, each of the SDAP, the PDCP, the RLC, the MAC, the PHY, the NAS, and the RRC may be added with an entity and referred to as, for example, an "SDAP entity" or the like. Meanwhile, a protocol stack for a U-Plane when the core network 300 is an EPC is a protocol stack without SDPA in FIG. 4. In other words, when the core network 300 is an EPC, the protocol stack for the U-Plane includes the PDCP, the RLC, the MAC, and the PHY. Moreover, a protocol stack for a C-Plane when the core network 300 is an EPC is formed such that NAS illustrated in FIG. 5 is present in Mobility Management Entity (MME) instead of AMF.

A function in each of the layers may be common or different between a case in which E-UTRA is adopted as the RAT and a case in which NR is adopted as the RAT. In the following, when E-UTRA or NR is not particularly specified, functions common to E-UTRA and NR will be described.

In FIG. 4, the U-Plane includes the Service Data Adaptation Protocol (SDAP), the Packet Data Convergence Protocol (the PDCP), the Radio Link Control (RLC), the Medium Access Control (MAC), and the PHYsical (PHY), and terminates at the terminal device 100 (UE) and the base station device 200 (gNB).

The PHY is a radio physical layer and transfers control information and data between the terminal device 100 and the base station device 200 by using a physical layer (Physical Channel). Hereinafter, in some cases, a direction from the base station device 200 to the terminal device 100 may be referred to as downlink (DL) and a direction from the terminal device 100 to the base station device 200 may be referred to as uplink (UL). Further, in the terminal device 100 and in the base station device 200, the PHY is connected to the MAC that is a higher-level layer by a transport channel (Transport Channel), and data moves between the PHY and the MAC via transport channel.

The MAC is a medium access control layer and performs mapping between the transport channel and a logical channel (LCH), multiplexing/demultiplexing of a MAC SDU, scheduling report, error correction using Hybrid Automatic Repeat request (HARQ), priority control, and the like. In the terminal device 100 and in the base station device 200, the MAC is connected to the RLC that is a higher-level layer by a logical channel, and data moves between the MAC and the RLC via logical channel.

Here, the Service Data Unit (SDU) indicates, in each of the sublayers, data to be sent from a higher-level sublayer or data to be sent to a higher-level layer. Further, the Protocol Data Unit (PDU) indicates, in each of the sublayers, data to be sent from a lower-level sublayer or data to be sent to the lower-level sublayer. Furthermore, each of the RLC, the PDCP, and the SDAP includes a control PDU, and the PDU may be referred to as a Control PDU. Moreover, in some cases, a different PDU may be referred to as a data PDU so as to be distinguished from the Control PDU.

The RLC is a radio link control layer and has three modes such as a Transparent Mode (TM), an Unacknowledged Mode (UM), and an Acknowledged Mode (AM). The RLC in the TM may be referred to as a TM RLC, the RLC in the UM may be referred to as a UM RLC, and the RLC in the AM may be referred to as an AM RLC. The RLC performs, on a transmission side, transfer of the PDU of the PDCP that is a higher-level layer, assignment of a sequence number (in the case of the UM or the AM), data splitting (in the case of the UM or the AM), re-splitting (in the case of the AM), and the like. Further, the RLC performs, on a reception side, reconstruction of the SDU (in the case of the UM or the AM), duplicate detection (in the case of the AM), discard of the SDU of the RLC (in the case of the UM or the AM), and the like. Furthermore, the RLC performs, on the transmission side and the reception side, re-establishment of the RLC. Meanwhile, in the case of E-UTRA, the RLC performs data coupling on the transmission side, reordering and in-order-delivery on the reception side, and the like. Examples of the Control PDU used in the RLC include a status PDU. The status PDU is a Control PDU that gives a report related to an RLC data PDU, for which an AM RLC entity on the reception side has succeeded in reception from an AM RLC entity that is a communication party, and an RLC data PDU that has failed in reception (in other words, a loss is detected).

The PDCP is a packet data convergence protocol layer, and performs data transfer for the U-Plane and the C-Plane, management of a PDCP sequence number, header compression/decompression, encryption and decryption, integrity protection/integrity verification, timer-based SDU discard, routing for a split bearer, reordering, in-order-delivery, and the like. Meanwhile, in the case of E-UTRA, some functions, such as the timer-based SDU discard in the PDCP, the reordering, and the in-order-delivery, may be limited to when a split bearer is a target. Examples of the Control PDU used in the PDCP include a PDCP status report. A PDCP status report is transmitted from a higher-level layer (RRC layer) to an AM DRB (to be described later) for which PDCP status report transmission is set in an uplink (UL) direction when, for example, the higher-level layer (RRC layer) requests a PDCP entity re-establishment or a PDCP data recovery.

The PDCP entity re-establishment process includes processes as described below.
- Initialization of a state variable in an UM DRB (to be described later) and an SRB (to be described later)
- Application of a security algorithm and a security key provided by a higher-level layer
- Transmission of data that is not completely transmitted and/or that is not successfully transmitted on the transmission side
- Transmission of a PDCP status report (when the PDCP status report transmission is set)

Further, a PDCP data recovery process includes processes as described below.
- Transmission of data that is not successfully transmitted on the transmission side
- Transmission of the PDCP status report (when the PDCP status report transmission is set)

The SDAP is a service data adaptation protocol layer, and performs mapping between a Quality of Service (QoS) flow and a Data Radio Bearer (DRB), marking of a QoS Flow Identifier (QFI) to a downlink (DL) packet and an uplink (UL) packet, and the like. Examples of the Control PDU used in the SDAP include an end-marker control PDU.

Examples of the higher-level layer of the U-Plane include layers of an Internet Protocol (IP), a Transmission Control Protocol (TCP), a User Datagram Protocol (UDP), Ethernet (registered trademark), and an application. The IP layer, the TCP layer, the UDP layer, and the Ethernet layer may be included in the PDU layer. Further, an IP Multimedia Subsystem (IMS) may be included in the application layer.

In FIG. 5, a C-Plane of an Access Stratum (AS) includes Radio Resource Control (RRC), PDCP, RLC, MAC, and PHY, and terminates at the terminal device 100 and the base station device 200. Further, a C-Plane of a Non Access Stratum (NAS) includes NAS, and terminates between the terminal device 100 and an Access and Mobility management Function (AMF) that is a device of the core network 300. The PDCP, the RLC, the MAC, and the PHY are the same as those of the U-Plane.

The RRC performs broadcast of System Information (SY) related to the AS and the NAS, paging, establishment/maintenance/release of the RRC connection between the terminal device 100 and the base station device 200, addition/change/release of carrier aggregation (CA), addition/change/release of dual connectivity (DC), a security function including management of a security key, establishment/configuration/maintenance/release of a Signaling Radio Bearer (SRB) and a Data Radio Bearer (DRB), a mobility function, a QoS management function, control of a terminal device measurement report and reporting, detection and recovery of Radio Ling Failure (RLF), transfer of a NAS message, and the like.

The NAS performs authentication, mobility management, security control, and the like. Meanwhile, as described above, when the device of the core network 300 is an EPC, the NAS terminates between the terminal device 100 and an MME that is a device of the core network 300.

### Channels

Channels used in the communication system will be described. In the following, examples of channels compliant with NR will be described, but the channels to be used are not limited to those described below. Further, a channel with the same name may be used for the same or similar purpose even in a different RAT (for example, E-UTRA) from NR.

### 1. Physical layer

A Physical Broadcast CHannel (PBCH) is a channel that is used to transmit notification information from the base station device 200 to the terminal device 100.

A Physical Downlink Control CHannel (PDCCH) is a channel that is used to transmit Downlink Control Information (DCI) or the like from the base station device 200 to the terminal device 100.

A Physical Downlink Shared CHannel (PDSCH) is a channel that is used to transmit data or the like, which is obtained from a higher-level layer, from the base station device 200 to the terminal device 100.

A Physical Uplink Control CHannel (PUCCH) is a channel that is used to transmit Uplink Control Information (UCI) or the like from the terminal device 100 to the base station device 200.

A Physical Uplink Shared CHannel (PUSCH) is a channel that is used to transmit data or the like, which is obtained from a higher-level layer, from the terminal device 100 to the base station device 200.

A Physical Random Access CHannel (PRACH) is a channel that is used to transmit a random access preamble or the like from the terminal device 100 to the base station device 200.

### 2. Transport channel

A Broadcast CHannel (BCH) is mapped onto the PBCH that is a physical layer.

A DownLink Shared CHannel (DL-SCH) is mapped onto the PDSCH that is a physical layer.

A Paging CHannel (PCH) is mapped onto the PDSCH that is a physical layer.

An UpLink Shared CHannel (UL-SCH) is mapped onto the PUSCH that is a physical layer.

A Random Access CHannel(s) (RACH) is mapped onto the PRACH that is a physical layer.

### 3. Logical channel

A Broadcast Control CHannel (BCCH) is a downlink channel for giving a notice of the system information, and is mapped onto the BCH of the transport channel.

A Paging Control CHannel (PCCH) is a downlink channel for conveying a paging message, and is mapped onto the PCH of the transport channel.

A Common Control CHannel (CCCH) is a channel for transmitting control information (RRC message or the like) between the terminal device 100 and the base station device 200, and is a channel that is used for the terminal device 100 that does not maintain (have) the RRC connection to the base station device 200, where downlink is mapped onto the DL-SCH of the transport channel and uplink is mapped onto the UL-SCH of the transport channel.

A Dedicated Control CHannel (DCCH) is a bidirectional point-to-point channel, transmits dedicated control information (RRC message or the like) between the terminal device 100 and the base station device 200, and is a channel that is used for the terminal device 100 that has the RRC connection to the base station device 200, where downlink is mapped onto the DL-SCH of the transport channel and uplink is mapped onto the UL-SCH of the transport channel.

A Dedicated Transport CHannel (DTCH) is a bidirectional channel dedicated to a point-to-point terminal and transmits user information (user data), where downlink is mapped onto the DL-SCH of the transport channel and uplink is mapped onto the UL-SCH of the transport channel.

### RRC message

The RRC message will be described. The RRC message is a message that include information needed to perform communication in a cell, and include a Master Information Block (MIB), a System Information Block (SIB), and the like. A parameter included in the RRC message may be referred to as a field or Information Element (IE).

The base station device 200 transmits the RRC message to the terminal device 100 and causes the terminal device 100 to perform a process in accordance with the RRC message. Further, the terminal device 100 receives the RRC message from the base station device 200 and performs a process in accordance with the RRC message. Furthermore, the terminal device 100 transmits the RRC message to the base station device 200 and request the base station device 200 to transmit the RRC message. Moreover, the terminal device 100 transmits the RRC message to the base station device 200 and gives a notice indicating that the process is completed in accordance with the RRC message that is received from the base station device 200.

Furthermore, the RRC message includes a message related to establishment of the RRC connection. Examples of the message related to the establishment of the RRC connection in the case of NR include an RRC setup request message (RRCSetupRequest), an RRC setup message (RRCSetup), and an RRC setup complete message (RRCSetupComplete). Moreover, examples of the message related to the establishment of the RRC connection in the case of E-UTRA include an RRC connection setup request message (RRCConnectionSetupRequest), an RRC connection setup message (RRCConnectionSetup), and an RRC connection setup complete message (RRCConnectionSetupComplete).

Furthermore, the RRC message includes a message related to initial activation (activation) of Access Stratum (AS) security. Examples of the message related to the initial activation of the AS security include a security mode command message (SecurityModeCommand).

Moreover, the RRC message includes a message related to reconfiguration of the RRC connection. Examples of the message related to the reconfiguration of the RRC connection in the case of NR include an RRC reconfiguration message (RRCReconfiguration) and an RRC reconfiguration setting complete message (RRCReconfigurationComplete). Furthermore, examples of the message related to the reconfiguration of the RRC connection in the case of E-UTRA include an RRC connection reconfiguration message (RRCConnectionReconfiguration) and, an RRC connection reconfiguration message (RRCConnectionReconfigurationComplete).

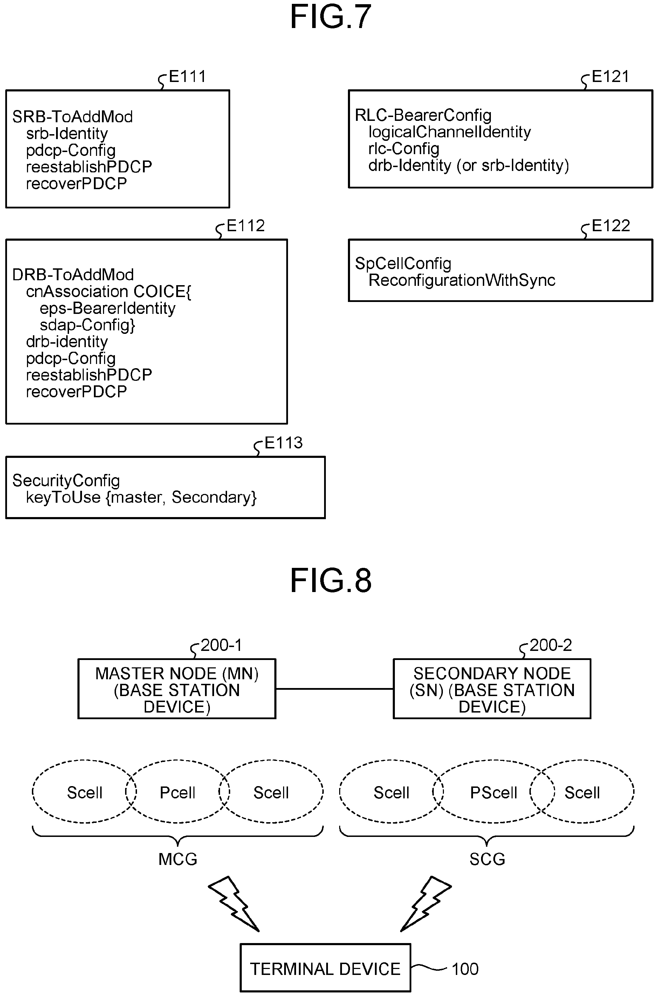

FIG. 6 and FIG. 7 are diagrams illustrating specific examples of parameters of the RRC message. In FIG. 6, a format E1 represents parameters of the RRC reconfiguration message.

The RRC reconfiguration message includes, as the parameters, radioBearerConfig, radioBearerConfig2, masterCellGroup, secondaryCellGroup, masterKeyUpdate, and sk-counter.

RadioBearerConfig and radioBearerConfig2 are configurations related to an MN termination bearer or an SN termination bearer, and includes SRB configuration, the DRB configuration, security configuration, and the like. The SRB configuration (the DRB configuration) includes parameters for designating an SRB identifier (the DRB t identifier), the PDCP configuration, and the PDCP re-establishment and a parameter for designating the PDCP data recovery. The security configuration includes a parameter (KeyToUse) indicating whether a master key is used or a secondary key is used. Further, when a plurality of RLCs are associated (for example, in the case of a split bearer or the like), the PDCP configuration includes a parameter indicating a primary path, a parameter for configuring the PDCP status report transmission, and the like.

MasterCellGroup and secondaryCellGroup respectively indicate MCG configuration and SCG configuration, and include a cell group identifier, RLC bearer configuration, SpCell configuration, and the like. The RLC bearer configuration includes a logical channel identifier, RLC configuration, a radio bearer identifier with which the RLC bearer is associated (an SRB identifier or a DRB identifier), and the like. The SpCell configuration includes information needed to synchronized reconfiguration and the like.

MasterKeyUpdate includes information needed for update of a master key.

sk-counter includes information needed for generation of a secondary key.

A format E11 illustrated in FIG. 6 is a diagram illustrating an example of parameters of RadioBearerConfig that is included in the RRC reconfiguration message. Further, a format E12 is a diagram illustrating an example of parameters of CellGroupConfig that is included in the RRC reconfiguration message.

A format E111 illustrated in FIG. 7 is a diagram illustrating an example of parameters of SRB-ToAddMod that is included in RadioBearerConfig in the format E11. Further, a format E112 is a diagram illustrating an example of parameters of the DRB-ToAddMod that is included in RadioBearerConfig in the format E11. A format E113 is a diagram illustrating an example of parameters of SecurityConig that is included in RadioBearerConfig in the format E11.

A format E121 illustrated in FIG. 7 is a diagram illustrating an example of parameters of RLC-BearerConfig that is included in CellGroupConfig in the format E12. Further, a format E122 is a diagram illustrating an example of parameters of SpCellConfig that is included in CellGroupConfig in the format E12.

Meanwhile, a message related to reconfiguration of the RRC connection performs establishment, configuration, change, or release of the radio bearer, the cell group, etc., synchronized reconfiguration, and establishment, configuration, change, or release of measurement information or the like.

Furthermore, the RRC message includes a message related to re-establishment of the RRC connection, a message related to release and suspension of the RRC connection, a message related to resume of the RRC connection, a message related to capacity of the terminal device, a message related to terminal information, a message related to failure information on MCG or SCG, and the like.

Meanwhile, when the master node is an eNB in MR-DC, the eNB may perform configuration related to NR in the terminal device 100 by transmitting the RRC message for E-UTRA while including, as a container, the RRC message for NR that is received from a gNB serving as the secondary node or a parameter to the terminal device 100. Further, the terminal device 100 may transmit the RRC message for E-UTRA while including, as a container, a complete message on configuration related to NR to the eNB serving as the master node.

Furthermore, when the master node is a gNB in MR-DC, the gNB may perform configuration related to E-UTRA by transmitting the RRC message for NR while including, as a container, the RRC message for E-UTRA that is received from an eNB serving as the secondary node or a parameter to the terminal device 100. Moreover, the terminal device 100 may transmit the RRC message for NR while including, as a container, a complete message on configuration related to E-UTRA to the gNB serving as the master node.

### Radio bearer

An example of a radio bearer of the communication system will be described.

### 1. Signaling radio bearer

A Signaling Radio Bearer (SRB) is a radio bearer for transmitting an RRC message or a NAS message.

An SRB 0 is a radio bearer for an RRC message that uses a CCCH logical channel. An SRB 1 is a radio bearer for an RRC message and a NAS message that use a DCCH logical channel before establishment of an SRB 2 (to be described later). The SRB 2 is a radio bearer for a NAS message and an RRC message that include (logged) measurement information in which a history is recorded, and uses the DCCH logical channel. The SRB 2 has lower priority than the SRB 1, and may be configured by the base station device 200 after the AS security is activated. An SRB 3 is a radio bearer for an RRC message when EN-DC, NGEN-DC, or NR-DC is configured in the terminal device 100, and uses the DCCH logical channel. Meanwhile, EN-DC, NGEN-DC, and NR-DC are types of MR-DC and will be described in detail later.

### 2. Data radio bearer

A Data Radio Bearer (DRB) is a radio bearer for transmitting user data.

### Protocol configuration of SRB and the DRB

The SRB 1 and the SRB 2 are configured with a single the PDCP and one or more RLC bearers. The RLC bearer is configured with RLC and a MAC logical channel. It is assumed that MAC is present for each of cell groups to be described below. A mode of the RLC is the AM. The SRB 3 is configured with a single the PDCP and a single RLC bearer. A mode of the RLC is the AM.

The DRB is configured with a single the PDCP and one or more RLC bearers. A mode of the RLC is the UM or the AM. The DRB may be referred to as an UM DRB when the RLC is the UM, and may be referred to as the AM DRB when the RLC is the AM. Further, the DRB is associated (associated) with a single SDAP when the core network 300 is a 5GC, and is associated with a single Evolved Packet System (EPS) bearer (or an EPS bearer identifier) when the core network 300 is an EPC.

Meanwhile, the 5GC is a core network that is standardized for 5G, and described in, for example, TS 23.501, TS 23.502, or the like that is 3GPP specifications. In contrast, the EPC is a core network that is standardized for 4G, and described in, for example, TS 23.401, TS 23.402, or the like that is 3GPP specifications.

### Cell group

A Cell Group (CG) indicates a configuration of a cell in MR-DC. In MR-DC, the cell group is classified into a Master Cell Group (MCG) and a Secondary Cell Group (SCG).

FIG. 8 is a diagram illustrating a configuration example of a cell group of the communication system. In FIG. 8, the base station device 200-1 serves as a master node (MN) and the base station device 200-2 serves as a secondary node (SN). In MR-DC, the master node provides a C-Plane connection to the core network 300 in MR-DC. In MR-DC, the secondary node does not provide a C-Plane to the core network 300, but provides an additional radio resource to the terminal device 100.

The CG is configured with a single Special Cell (SpCell) or a single SpCell and one or more Secondary Cells (SCells). The SpCell in the MCG may be referred to as a Primary Cell (PCell) and the SpCell in the SCG may be referred to as a Primary SCG Cell (PSCell).

In the example illustrated in FIG. 8, the MCG is configured with a single PCell and two SCells. Further, in the example illustrated in FIG. 8, the SCG is configured with a single PSCell and two SCells. The MCG is a CG when MR-DC is not configured or a CG that belongs to the master node when MR-DC is configured. The SCG is a CG that belongs to the secondary node when MR-DC is configured.

The PCell is a cell that operates on a primary frequency (operating on the primary frequency) in the MCG, and used for an initial connection establishment procedure (procedure), a connection re-establishment procedure, or the like of the terminal device 100. The connection establishment/re-establishment procedure includes a random access procedure.

The PSCell is a cell that is used, in the SCG, for the random access procedure or the like when the terminal device 100 performs synchronized reconfiguration (Reconfiguration With Sync).

The SCell is a cell that provides the SpCell and an additional radio resource to the terminal device 100 in which carrier aggregation is configured.

### Types of MR-DC

Types of MR-DC will be described. MR-DC is classified into four types depending on a type (corresponding generation) of the base station device 200 of the master node and the secondary node or a type (corresponding generation) of the core network 300.

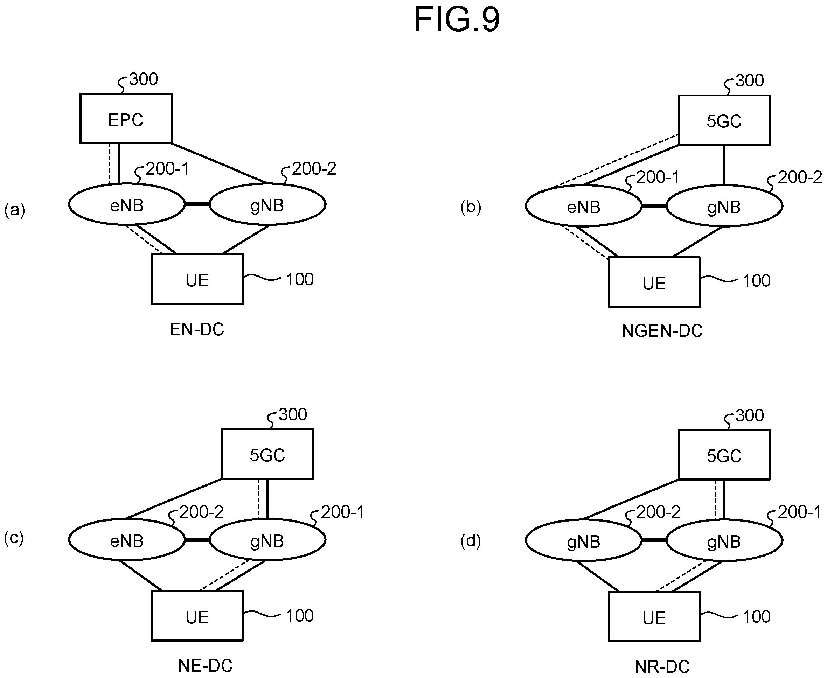

FIG. 9 is a diagram for explaining the types of MR-DC. Each of the types of MR-DC will be described below. In FIG. 9, the base station device 200-1 serves as the master node and the base station device 200-2 serves as the secondary node. Further, in FIG. 9, thin solid lines indicate U-Plane connections, dashed lines indicate C-Plane connections, and thick solid lines indicate interfaces between base stations.

FIG. 9(a) is a diagram illustrating an example of E-UTRA-NR DC (EN-DC). EN-DC is MR-DC in which the base station device 200-1 serving as the master node is configured with an eNB for E-UTRA, the base station device 200-2 serving as the secondary node is a gNB for NR, and the core network 300 is configured with the EPC.

FIG. 9(b) is a diagram illustrating an example of NG-RAN E-UTRA-NR DC (NGEN-DC). NGEN-DC is MR-DC in which the master node (the base station device 200-1) is configured with an eNB, the secondary node (the base station device 200-2) is configured with a gNB, and the core network 300 is configured with a 5GC.

FIG. 9(c) is a diagram illustrating an example of NR-E-UTRA DC (NE-DC). NE-DC is MR-DC in which the master node (the base station device 200-1) is configured with a gNB, the secondary node (the base station device 200-2) is configured with an eNB, and the core network 300 is configured with a 5GC.

FIG. 9(d) is a diagram illustrating an example of NR-NR DC (NR-DC). NR-DC is MR-DC in which the master node (the base station device 200-1) is configured with a gNB, the secondary node (the base station device 200-2) is configured with another gNB, and the core network 300 is configured with a 5GC.

EN-DC and NGEN-DC may be referred to as (NG) EN-DC. The secondary node in EN-DC may be referred to as an en-gNB. Further, the master node in NGEN-DC may be referred to as an ng-eNB.

Meanwhile, in FIG. 9, as an interface of the C-Plane between the terminal device 100 and the base station device 200-1, a state is assumed in which the SRB 1 and the SRB 2 are established. When a split SRB 1, a split SRB 2, or the SRB 3 is established, in some cases, a part of the message of the C-Plane may be transmitted and received between the secondary node and the terminal device 100. The part of the message of the C-Plane received by the secondary node is transmitted to the master node via interface between the base stations the interface.
Further, the part of the message of the C-Plane transmitted from the secondary node is transmitted from the master node to the secondary node via interface between the base stations.

### Bearer type of MR-DC

A bearer type in MR-DC will be described. In the following, a configuration in which the PDCP terminates at the master node and the PDCP is provided on the master node side may be referred to as MN-terminated. Further, a configuration in which the PDCP terminates at the secondary node and the PDCP is provided on the secondary node side may be referred to as SN-terminated. The bearer type is classified into six types as described below.
(A) An MCG bearer for which an RLC bearer is present on the MCG side in MN-terminated
(B) A Split bearer for which an RLC bearer is present in both of the MCG and the SCG in MN-terminated
(C) An SCG bearer for which an RLC bearer is present on the SCG side in MN-terminated
(D) An MCG bearer for which an RLC bearer is present on the MCG side in SN-terminated
(E) A Split bearer for which an RLC bearer is present in both of the MCG and the SCG in SN-terminated
(F) An SCG bearer for which an RLC bearer is present on the SCG side in SN-terminated

The DRB is configured with any of the six bearer types as described above.

The SRB 1 and the SRB 2 are configured with the MCG bearers ((A) as described above) in MN-terminated or the Split bearers ((B) as described above) in MN-terminated. When the SRB 1 and the SRB 2 are configured with the Split bearers in MN-terminated, may be referred to as a Split SBR 1 and a Split SBR 2, respectively.

The SBR 3 is configured with the SCG bearer ((F) as described above) in SN-Terminated.

Further, in the case of the Split bearer, a primary path is configured. The primary path indicates the base station device 200 to which the terminal device 100 transmits data in an initial state (preferentially). The primary path is designated by the cell group (MCG or SCG) and the LCH. The terminal device 100 transmits data to the base station device 200 serving as the primary path unless a transmission data amount of uplink data exceeds a predetermined threshold. If the transmission data amount exceeds the predetermined threshold, the terminal device 100 is allowed to transmit data to any of the base station devices 200.

Further, a security key used in the PDCP is different between the case of MN-Terminated (master key) and the case of SN-Terminated (secondary key).

### Synchronized reconfiguration (handover)

Synchronized reconfiguration (handover) will be described below. The synchronized reconfiguration (Reconfiguration With Sync) is a procedure that is executed by the terminal device 100 by including, in the RRC reconfiguration message that is transmitted from the base station device 200 to the terminal device 100, a parameter ((reconfigurationWithSync: hereinafter, may be referred to as a "synchronized reconfiguration parameter") indicating that the synchronized reconfiguration is to be performed.

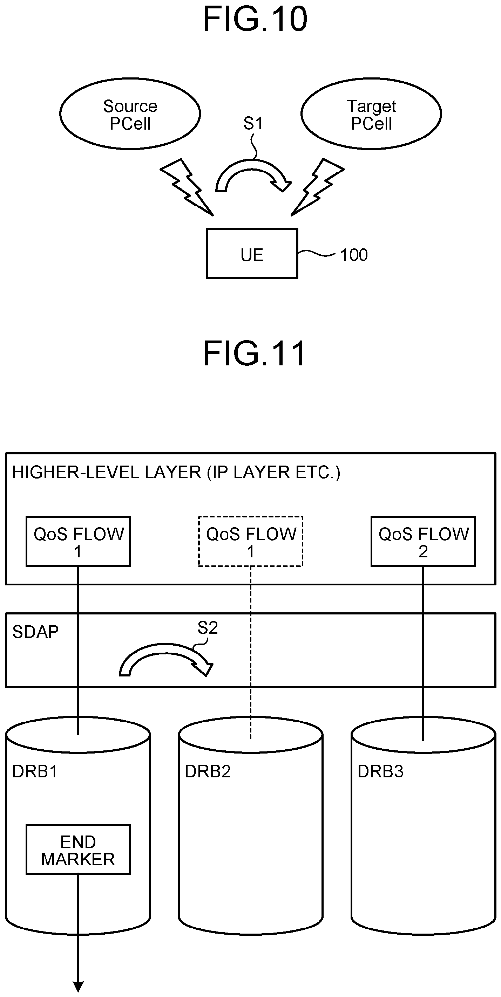

FIG. 10 is a diagram for explaining the synchronized reconfiguration. The terminal device (UE) 100 changes a connected PCell from a current source PCell to a target PCell (Step S1). The synchronized reconfiguration parameter is individually included in a parameter for configuration of the MCG (hereinafter, may be referred to as an "MCG configuration parameter") or a parameter for configuration of the SCG (hereinafter, may be referred to as an "SCG configuration parameter"). In other words, when the synchronized reconfiguration parameter is included in the MCG configuration parameter, MCG-synchronized reconfiguration is performed, and, when the synchronized reconfiguration parameter is included in an SCG configuration parameter, SCG-synchronized reconfiguration is performed.

The synchronized reconfiguration is a procedure in which the terminal device 100 changes the PCell or the PSCell, and includes operation, such as a random access to a new (changed or target) PCell or PSCell, reset of the MAC, PDCP data recovery (in the case of the AM DRB). Further, the synchronized reconfiguration may include a change of the security key. In this case, PDCP entity re-establishment is performed in addition to the operation as described above. Meanwhile, in the present embodiment, the PDCP entity re-establishment may be referred to as PDCP re-establishment. When the security key is changed, a new key is generated in the RRC entity of the terminal device 100, and the PDCP entity is re-established, so that the new key is applied to the PDCP entity.

### QoS flow remapping in SDAP

In the terminal device 100, when a DRB with which a QoS flow is associated (mapped) is to be changed, an end-marker control PDU is transmitted to a DRB that is associated before the change. The QoS flow is a Service Data Flow (SDG) that has the same the QoS request, and is identified by a QoS Flow Identifier (QFI). The SDF is, for example, an IP flow, an Ethernet flow, or the like, and differs depending on a higher-level layer.

FIG. 11 is a diagram for explaining transmission of the end-marker control PDU. For example, in the terminal device 100, a DRB that is associated with a QoS flow 1 is changed form a DRB 1 to a DRB 2 (Step S2). At this time, the terminal device 100 causes the DRB 1 that is adopted before the change to transmit data of the QoS flow 1 that is accumulated before instruction of the change. Further, the terminal device 100 causes the DRB 1 to transmit the end-marker control PDU indicating that this is the last time for the DRB 1 to transmit the data of the QoS flow 1. Accordingly, the base station device 200 is able to recognize that the DRB 1 that is adopted before the change does not subsequently transmit the data of the QoS flow 1. Meanwhile, the QoS flow and the DRB are associated with each other by a parameter that is included in the RRC reconfiguration message or header information that is included in a downlink SDAP data PDU. The latter case is referred to as reflective mapping.

### RRC state (mode)

An RRC state of the terminal device 100 indicates a state related to the RRC connection of the terminal device 100. A state in which the RRC connection to the base station device 200 is not established may be referred to as an RRC idle mode (RRC_IDLE). A state in which the RRC connection to the base station device 200 is established may be referred to as an RRC connected mode (RRC_CONNECTED). A state in which the RRC connection to the base station device 200 is suspended may be referred to as an RRC inactive mode (RRC_INACTIVE). Meanwhile, when the core network 300 is an EPC, the state in which the RRC connection to the base station device 200 is suspended may be referred to as a different description, such as RRC suspend.

Transition from the RRC idle mode to the RRC connected mode may be performed by transmitting and receiving a message related to establishment of the RRC connection between the terminal device 100 and the base station device 200. For example, in NR, the terminal device 100 may transition to the RRC connected mode such that the terminal device 100 transmits an RRC setup request message to the base station device 200 and receives, as a reply, an RRC setup message from the base station device 200. Meanwhile, the RRC setup request message and the RRC setup message may be transmitted and received by using the CCCH logical channel. Further, a cell that is used to transmit and receive the RRC setup request message and the RRC setup message may serve as a PCell.

The terminal device 100 that has transitioned to the RRC connected mode is able to transmit and receive user data (for example, an IP packet, an Ethernet frame, or the like) by further receiving a message related to initial activation of the AS security and a message for re-establishment of the RRC connection from the base station device 200 and performing configuration in accordance with the message. Further, in some cases, carrier aggregation or MR-DC may be configured by the message related to the re-establishment of the RRC connection. Meanwhile, the message related to the initial activation of the AS security and the message related to the re-establishment of the RRC connection may be transmitted and received by using the DCCH logical channel.

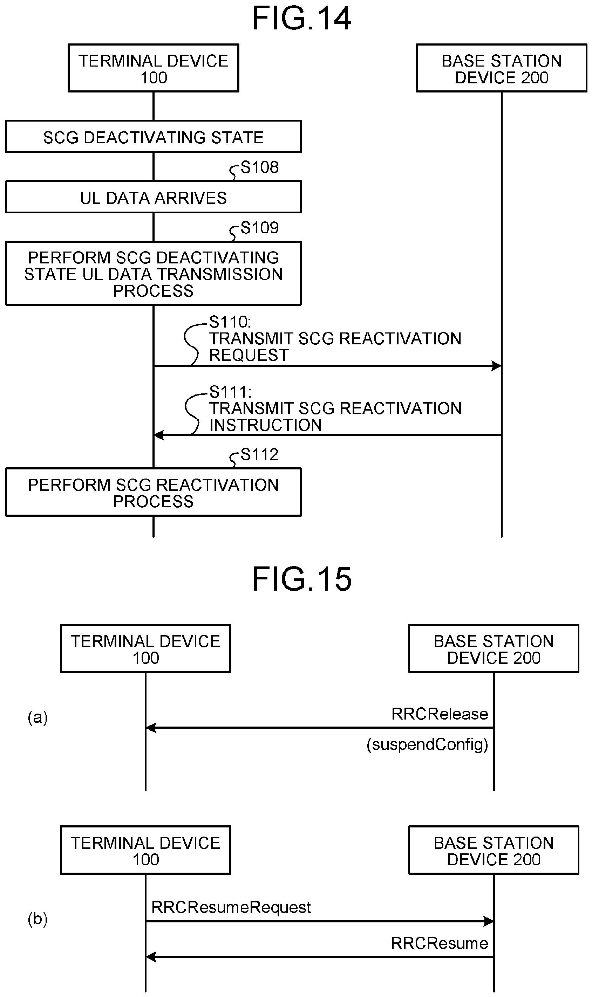

Transition from the RRC connected mode to the RRC inactive mode may be performed by causing the terminal device 100 to transmit and receive, to and from the base station device 200, a message related to release of the RRC connection, which includes a parameter related to configuration of suspend of the RRC connection. FIG. 15(a) is a diagram illustrating a transition procedure (procedure) from the RRC connected mode to the RRC inactive mode when the base station device 200 is a gNB (the master node is a gNB in the case of MR-DC) and the core network 300 is a 5GC. The base station device 200 transmits, to the terminal device 100, a message related to a release of the RRC connection (RRCRelease) while including a parameter related to suspend configuration of the RRC connection (suspendConfig) in the message. The terminal device 100 performs a process in accordance with the received RRC release message, and transitions to the RRC inactive mode. Meanwhile, the RRC release message may be transmitted by using the DCCH logical channel.

When transition to the RRC inactive mode, the terminal device 100 may perform a process including storage of an UE inactive AS context and suspend of a radio bearer other than the SRB 0. The UE inactive AS context is configuration that includes a current security key of the terminal device 100 (immediately before transition to the RRC inactive mode), a state related to header compression, association between the QoS flow and the DRB, a Cell Radio Network Temporary Identifier (C-RNTI) in a source PCell (handover source), and the like. Further, when MR-DC is configured in the terminal device 100, configuration related to the SCG may be stored as the UE inactive AS context. Meanwhile, it may be possible to eliminate a part of a parameter related to handover, such as synchronized reconfiguration, a part of a parameter that is configured by the SIB, or the like from the configuration that is stored as the UE inactive AS context.

Transition from the RRC inactive mode to the RRC connected mode may be performed by transmitting and receiving a message related to resume of the RRC connection between the terminal device 100 and the base station device 200. FIG. 15(b) is a diagram illustrating a transition procedure (procedure) from the RRC inactive mode to the RRC connected mode when the base station device 200 is a gNB (the master node is a gNB in the case of MR-DC) and the core network 300 is a 5GC. The terminal device 100 may transition to the RRC connected mode such that the terminal device 100 transmits an RRC resume request message (RRCResumeRequest) to the base station device 200, receives, as a reply, an RRC resume message (RRCResume) from the base station device 200, and performs a process in accordance with the received RRC resume message. When the terminal device 100 stores the configuration related to the SCG as the UE inactive AS context and SCG retention at the time of RRC resume is configured, the base station device 200 may include SCG configuration in the RRC resume message and include SCG-synchronized reconfiguration in the SCG configuration. Meanwhile, the RRC resume request message is transmitted by using, for example, the CCCH logical channel. Further, the RRC resume message is transmitted by using, for example, the DCCH logical channel.

### SCG failure information

If the terminal device 100 detects an SCG failure when MR-DC is configured, the terminal device 100 may transmit a message related to SCG failure information (SCGFailureInformation) to the master node vie the MCG. The SCG failure may be detected when, for example, physical layers are not synchronized on the SCG side, a random access is unsuccessful on the SCG side, the number of times of RLC retransmission on the SCG side exceeds a predetermined threshold, the SCG-synchronized reconfiguration is unsuccessful, a process according to the SCG configuration is not possible, or integrity verification on the SRB 3 is unsuccessful. When transmitting the message related to the SCG failure information, the terminal device 100 may perform a process including suspend of SCG transmission to all of the radio bearers, that is, suspend of transmission to all of the radio bearers that are associated with the SCG. Meanwhile, in the case of (NG) EN-DC, it may be possible to transmit SCGFailureInformationNR instead of SCGFailureInformation. SCGFailureInformation and SCGFailureInformationNR are transmitted by using, for example, the DCCH logical channel.

The base station device 200 that has received the message related to the SCG failure information from the terminal device 100 may transmit a message related to reconfiguration of the RRC connection to the terminal device 100 to reconfigure the SCG.

### SCG deactivation

In (NG) EN-DC or NR-DC, in some cases, communication between the secondary node and the terminal device 100 may be limited by deactivating the SCG (SCG deactivation) that is configured in the terminal device 100. Hereinafter, a state in which the SCG is in a deactivated state (also referred to as a "deactivation state" or a "deactivate state") may be referred to as an "SCG deactivating state". Further, a state in which the SCG is in an activated state (also referred to as an "activation state" or an "activate state") may be referred to as an "SCG (re)activating state". Furthermore, operation of causing the SCG to enter the deactivated state may be referred to as "SCG deactivation". Moreover, operation of causing the SCG in the deactivated state to enter the activated state may be referred to as "SCG (re)activation". Furthermore, hereinafter, "reactivation" and "reactivate" includes "activation" and "activate", respectively.

The terminal device 100 in the SCG deactivating state meets a part or whole of conditions as described below.
- When a message related to reconfiguration of the RRC connection (for example, the RRC reconfiguration message) for the SCG is received from the base station device 200, a process according to the message is performed
- Uplink transmission on the SCG side is not performed
- Process on uplink data on the SCG side may be performed
- Monitoring (reception) of a PDCCH is not performed in the PSCell
- Transmission of a PUSCH on the SCG side is not performed

Further, when the message related to reconfiguration of the RRC connection received from the base station device 200 includes a parameter designating the SCG deactivation and a parameter related to the SCG-synchronized reconfiguration, the terminal device 100 does not perform random access processing in at least the SCG.

Meanwhile, the terminal device 100 in the SCG deactivating state may perform communication in the RRC connected mode with the base station device 200 by using the MCG.

### First Embodiment

A first embodiment will be described. The communication system appropriately controls, in communication between the terminal device 100 and the secondary node (the base station device 200), a change from the SCG deactivating state to the SCG (re)activating state or a change from the SCG (re)activating state to the SCG deactivating state. Appropriate control indicates, for example, control of preventing unneeded change or postponing a change timing to a needed timing in order to achieve power saving. The communication system performs control of preventing unneeded uplink transmission in the SCG deactivating state in the communication between the terminal device 100 and the secondary node (the base station device 200, and achieves power saving.

### Process of transition to SCG deactivation

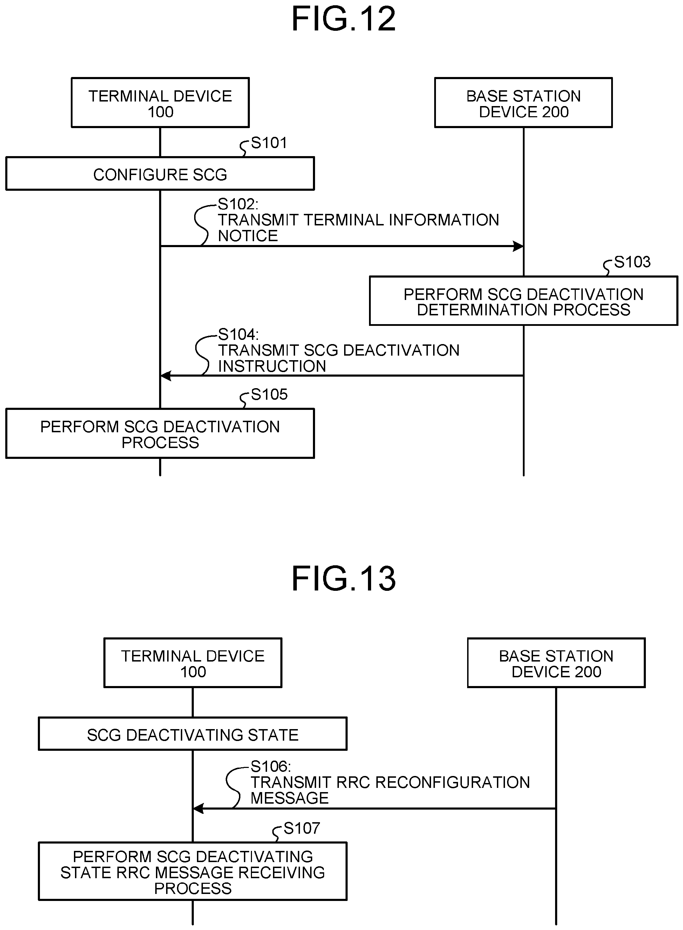

FIG. 12 is a sequence diagram illustrating operation of transition to the SCG deactivation. The base station device 200 is, for example, a master node in MR-DC. MR-DC in FIG. 12 includes, for example, (NG) EN-DC or NR-DC. Further, in a sequence in FIG. 12, the single base station device 200 is illustrated, but it may be possible to use the plurality of base station devices 200 including the master node and the secondary node. Furthermore, in the sequence in FIG. 12, a message transmitted and received by the base station device 200 may be transmitted and received by any of the master node and the secondary node. When the master node performs the process that is performed by the base station device 200 in FIG. 12, it is assumed that a message that is transmitted from the terminal device 100 to the secondary node is the base station is transmitted to the master node. Moreover, the process performed by the base station device 200 may be performed by any of the master node and the secondary node. Meanwhile, to meet the conditions as described above, it is assumed that the terminal device 100 does not transmit a message to the secondary node and receive a PDDCH from the secondary node in the SCG deactivating state.

In FIG. 12, the terminal device 100 configures the SCG (Step S101), and is in the SCG (re)activating state. Configuration of the SCG is performed by causing the terminal device 100 to receive the RRC reconfiguration message including the SCG configuration parameter from the base station device 200. The SGC configuration parameter includes, for example, an NR SGC configuration parameter.

The terminal device 100 transmits a terminal information notice to the base station device 200 (Step S102). The terminal information notice is, for example, a parameter that is included in the RRC message or the RRC message. Further, the terminal information notice may be, for example, UE assistance information of the RRC message or a message with a different description. The terminal information notice includes, for example, information indicating whether or not power saving is needed in the terminal device 100. The terminal device 100 determines whether or not power saving is needed in accordance with a remaining battery level, for example.

Furthermore, the terminal information notice includes, for example, information indicating whether or not the SCG deactivation (or the SCG release) is needed. The terminal device 100 determines whether or not the SCG deactivation is needed depending on, for example, an amount of communication (data communication amount) with the secondary node. Moreover, when an SCG-synchronized reconfiguration parameter is received in the SCG deactivating state (execution of the SCG-synchronized reconfiguration is designated), the terminal information notice may include information indicating whether or not the reconfiguration is performed immediately.

Furthermore, the terminal information notice may include, for example, information indicating that, when UL data is generated, the SCG (re)activation is to be performed without permission from the base station device 200 (without transmission of the SCG reactivation request at Step S110 (to be described later)). With this configuration, it is possible to omit a part of transmission and reception of the message between the base station device 200 and the terminal device 100 in the SCG (re) activation.

Upon receiving the terminal information notice, the base station device 200 performs an SCG deactivation determination process (Step S103). Meanwhile, the base station device 200 also performs the SCG deactivation determination process when an event that needs (or that may need) the SCG deactivation, in addition to receiving the terminal information notice.

The SCG deactivation determination process is a process of determining whether or not to perform the SCG deactivation on the terminal device 100. The base station device 200 determines, in the SCG deactivation determination process, for example, whether or not the SCG deactivation is performed by using an amount of communication between the terminal device 100 and the secondary node. The base station device 200 determines that the SCG deactivation is to be performed when the amount of communication using the secondary node is small; for example, when the amount of communication between the terminal device 100 and the secondary node is equal to or smaller than a predetermined value in a predetermined period or when communication between the terminal device 100 and the secondary node does not occur for a predetermined time.

Further, the base station device 200 determines, in the SCG deactivation determination process, a need of the SCG deactivation by using, for example, an amount of allocatable radio resources of the secondary node. The base station device 200 determines that the SCG deactivation is to be performed when, for example, an amount of free radio resources of the secondary node is equal to or smaller than a predetermined value.

When determining, in the SCG deactivation determination process, that the SCG deactivation is to be performed, the base station device 200 transmits an SCG deactivation instruction to the terminal device 100 (Step S104). The SCG deactivation instruction may be, for example, a parameter that is included in the RRC message or the RRC message. The SCG deactivation instruction may be a parameter that is included in the RRC reconfiguration message, may be a parameter that is included in the RRC resume message, may be a parameter that is included in the RRC connection reconfiguration message, or a parameter that is included in a message with a different description. The SCG deactivation instruction may be a parameter that instructs the terminal device 100 to perform the SCG deactivation. Further, the SCG deactivation instruction may be a parameter indicating that the SCG of the terminal device 100 is in the deactivate state. Furthermore, the SCG deactivation instruction may be a parameter, such as scg-state.

The SCG deactivation instruction includes, for example, information indicating whether or not a part or whole of the SCG-synchronized reconfiguration process is to be immediately performed when the terminal device 100 is instructed to perform the SCG-synchronized reconfiguration in the SCG deactivating state. When information indicating that the whole of the process is to be immediately performed is included, the terminal device 100 immediately performs the SCG-synchronized reconfiguration. Further, when information indicating that a part or whole of the process is not immediately performed is included, the terminal device 100 performs a process that is not yet performed in the SCG-synchronized reconfiguration process (hold the synchronized reconfiguration) or does not perform a part or whole of the SCG-synchronized reconfiguration process (discards a part or whole of the instruction (parameter) on the synchronized reconfiguration) when performing the SCG (re)activation at a later time.

Furthermore, the SCG deactivation instruction may include information indicating an instruction to immediately perform a part or whole of the SCG-synchronized reconfiguration process when, for example, the terminal device 100 is instructed to perform the SCG-synchronized reconfiguration in the SCG deactivating state, and if at least a first condition is not met. In this case, the terminal device 100 immediately performs the SCG-synchronized reconfiguration at least when the first condition is not met. Moreover, in this case, if at least the first condition is met, the terminal device 100 performs a process that is not yet performed in the SCG-synchronized reconfiguration process (hold the synchronized reconfiguration) or does not perform a part or whole of the SCG-synchronized reconfiguration process (discards a part or whole of the instruction (parameter) on the synchronized reconfiguration) when performing the SCG (re)activation at a later time.

The first condition is that, for example, a part or whole of conditions from (condition 1-1) to (condition 1-4) below.

(Condition 1-1): the SCG-synchronized reconfiguration is due to a change of a security key (KgNB or KeNB) of the master node or a change of an AS security key that is generated from the security key of the master node.

(Condition 1-2): the SCG-synchronized reconfiguration is due to a change of a security key (S-KgNB or S-KeNB) of the secondary node or a change of the AS security key that is generated from the security key of the secondary node.

(Condition 1-3): a radio bearer that is related to the SCG RLC bearer does not include a radio bearer that uses the master key.

(Condition 1-4): all of radio bearers that are related to the SCG RLC bearer use the secondary key.

Meanwhile, the radio bearer that uses the master key may be a radio bearer for which a parameter (keyToUse) that indicates whether to use the master key or the secondary key is set to master (or primary). Furthermore, the radio bearer that uses the secondary key may be a radio bearer for which the parameter (keyToUse) that indicates whether to use the master key or the secondary key is set to secondary.

When at least the first condition as described above is met, communication in MR-DC (in particular, communication using the master node) is not disturbed even if the terminal device 100 does not immediately perform a part or whole of the SCG-synchronized reconfiguration process. With this configuration, the terminal device 100 does not perform unneeded SCG (re)activation, so that it is possible to reduce power consumption.

Meanwhile, the SCG deactivation instruction may include, for example, information indicating an instruction to immediately perform he SCG-synchronized reconfiguration when the terminal device 100 is instructed to perform the SCG-synchronized reconfiguration in the SCG deactivating state. In this case, the terminal device 100 immediately performs the SCG-synchronized reconfiguration independent of the first condition.

Furthermore, the SCG deactivation instruction may include, for example, information indicating an instruction to perform the SCG (re)activation without permission from the base station device 200 when UL data is generated. In this case, the terminal device 100 immediately performs the SCG (re)activation.

Upon receiving the SCG deactivation instruction, the terminal device 100 performs the SCG deactivation process (Step S105). The SCG deactivation process is a process for transition to the SCG deactivation. Meanwhile, the terminal device 100 may determine that the SCG deactivation process needs to be performed and perform the SCG deactivation process upon receiving the SCG deactivation instruction. Further, the terminal device 100 may determine that the SCG deactivation process need not be performed and does not perform the SCG deactivation process upon not receiving the SCG deactivation instruction.

The SCG deactivation process may include a part or whole of processes (1) to (3) below.
(1) A process of regarding that the SCG is to be deactivated
(2) A process of notifying a lower-level layer that the SCG is deactivated
(3) A process of giving a trigger for SDU discard to the PDCP entity of the SRB 3 and/or re-establish the RLC entity of the SRB 3 when the terminal device 100 is in the RRC connected mode or the RRC inactive mode before receiving the RRC message including the SCG deactivation instruction

In the process (2) as described above, the lower-level layer may be an MAC layer, an RLC layer, or a PDCP layer. Further, the process (3) as described above may be performed when the SRB 3 is configured in the terminal device 100 and the SRB 3 is not released by the RRC message including the SCG deactivation instruction.

Furthermore, the terminal device 100 may continue the SCG deactivation state when receiving the RRC message including the SCG deactivation instruction in the SCG deactivating state.

Moreover, when receiving, in the SCG deactivating state, the RRC reconfiguration message that does not include the SCG deactivation instruction, the RRC connection reconfiguration message that does not include the SCG deactivation instruction, or the RRC resume message that does not include the SCG deactivation instruction, the terminal device 100 may determine that an SCG (re)activation process is to be performed, and perform the SCG (re)activation process.

The SCG (re)activation process may include a part or whole of processes (4) and (5) below.
(4) A process of regarding that the SCG is to be (re) activated
(5) A process of notifying the lower-level layer that the SCG is (re)activated when the terminal device 100 is in the SCG deactivating state

In the process (5) as described above, the lower-level layer may be a MAC layer, an RLC layer, or a PDCP layer.

In the SCG deactivation process, the terminal device 100 stops a part or whole of times that are activated in relation to the SCG. Further, the terminal device 100 resets a part or whole of counters that are configured in the SCG. Furthermore, the terminal device 100 resets the MAC of the SCG. Moreover, the terminal device 100 performs a second process on a radio bearer that meets at least a second condition. The second condition is that the radio bearer is an SCG bearer, the radio bearer is a split bearer, or the radio bearer is a split bearer and a primary path is configured in the SCG. Furthermore, the radio bearer that meets the second condition may be, for example, a part or whole of radio bearers that are configured in the terminal device 100.

Meanwhile, the timers that are activated in relation to the SCG and that are to be stopped may include a timer for detecting a Radio Ling Failure (RLF) of the SCG. Further, the timers that are activated in relation to the SCG and that are to be stopped may include a timer related to a measurement report for the SCG. Furthermore, the counters that are configured in the SCG to be reset may include a counter for detecting a Radio Ling Failure (RLF) of the SCG.

Moreover, "the second process is performed on the radio bearer that meets at least the second condition" may indicate that the terminal device 100 determines whether or not each of the radio bearers meets at least the second condition, and when determining that at least the second condition is met, performs the second process on the radio bearers that meet at least the second condition.

Furthermore, "the second process is performed on the radio bearer that meets at least the second condition" may indicate that the terminal device 100 determines whether or not each of the radio bearers meets at least the second condition, and when determining that at least the second condition is met and further determining that it is needed to perform the second process on the subject radio bearer, the terminal device 100 performs the second process on the subject radio bearer.

"The radio bearer is an SCG bearer" in the second condition may indicates that one or both of a parameter that indicates one or more RLCs (moreThanOneRLC) and a parameter that indicates a primary path (primaryPath) is not configured in the radio bearer (PDCP) and the RCL bearer of the radio bearer is in the SCG. Further, "the radio bearer is an SCG bearer" in the second condition may indicate that the RLC bearer of the radio bearer is present in only the SCG. The "RLC bearer of the radio bearer" may be an RLC bearer related to the radio bearer.

Furthermore, "the radio bearer is a split bearer and a primary path is configured in the SCG" in the second condition may indicate that a primary path (or a parameter indicating the primary path) of the radio bearer (PDCP) is configured in the SCG (or refers to the SCG).

The second process is a process that is performed on a part or all of the radio bearer that meet at least the second condition. The second process is a part or whole of processing that is performed at the time of transition to the SCG deactivation and pre-processing. The second process includes, for example, a part or whole of a process as described below. Hereinafter, a part or all of the radio bearers that meet at least the second condition may be referred to as a second radio bearer.
- A process of immediately (before deactivation of the SCG) transmitting or discarding data for which transmission is not completed in the PDCP of the second radio bearer.
- A process of stopping a recording timer if the recording timer is operating in the PDCP of the second radio bearer and transmitting all of stored PDCP SDUs in sequence to a higher-level layer after decompressing a header.
- A process of re-establishing the RLC of the second radio bearer.
- A process of transmitting a PDCP status report when PDCP status report transmission is configured in the PDCP of the second radio bearer.

Further, the second process may be performed in the following procedure or a procedure including the following procedure.

In the process of immediately transmitting data for which transmission is not completed in the PDCP, for example, in the case of an UM DRB, it may be possible to regard a PDCP SDU to which a sequence number is assigned but which is not handed over to a lower-level layer as a PDCP SDU that is just received from a higher-level layer, and transmit the PDCP SDU in order. Further, at this time, it is not always needed to restart a discard timer.

Furthermore, in the process of immediately transmitting data for which transmission is not completed in the PDCP, for example, in the case of an AM DRB or in the case of an AM DRB for which the PDCP entity is not suspended, a PDCP SDU for which a transmission success is not confirmed by the lower-level layer and/or a PDCP SDU to which a sequence number is assigned but which is not handed over to the lower-level layer is transmitted in order.

Moreover, in the process of immediately transmitting data for which transmission is not completed in the PDCP, for example, in the case of an AM DRB for a Uu interface (the interface between the terminal device 100 and the base station device 200) for which the PDCP entity is suspended, it may be possible to regard a PDCP SDU for which a transmission success is not confirmed by the lower-level layer and/or a PDCP SDU to which a sequence number is assigned but which is not handed over to the lower-level layer as a PDCP SDU that is just received from the higher-level layer, and transmit the PDCP SDU in order. Furthermore, at this time, it is not always needed to restart the discard timer. Meanwhile, the discard timer may be a timer that is used, at the time of expiry, to discard a subject PDCP SDU.

An example of operation inside the terminal device 100 when the second process is performed on the radio bearer that meets at least the second condition will be described below.

For example, the RRC of the terminal device 100 gives a second notice to the PDCP of a part or all of the radio bearers that are the SCG bearers or the split bearers. The PDCP may be replaced with a lower-level layer (lower layer(s)). The PDCP that has received the second notice performs the second process when the radio bearer is the SCG bearer (when a single RLC is related) or a split bearer (when two or more RLCs are related) and the primary path is configured on the SCG side.

Furthermore, for example, the RRC of the terminal device 100 gives the second notice to the PDCP of the second radio bearer. The PDCP may be replaced with a lower-level layer (lower layer(s)). The PDCP that has received the second notice performs the second process.

A part of the radio bearer that meets at least the second condition may be, for example, an SRB that meets at least the second condition or a DRB that meets at least the second condition.

The second notice is, for example, a notice that designates discard of data of the PDCP. Further, the second notice may be a notice that designates immediate transmission of data for which transmission is not completed. Furthermore, the second notice may include information, such as SCG deactivated or CG UL transmission prohibited (suspended), which indicates that the SCG is deactivated. Moreover, the second notice may include a part or whole of the information as described above. Furthermore, the second notice may be a plurality of messages that include a part of the information as described above.

With this configuration, for example, when the terminal device 100 does not immediately perform the SCG-synchronized reconfiguration but lately performs the SCG-synchronized reconfiguration although the terminal device 100 has receives the instruction, and if the PDCP of the SCG is re-established, it is possible to prevent occurrence of uplink transmission due to transmission of UL data for which transmission is not successful. In other words, the terminal device 100 is able to prevent unneeded SCG (re)activation, so that it is possible to reduce power consumption.

Furthermore, the RRC of the terminal device 100 transmits, in the SCG deactivation process, second information the SDAP that is related to the DRB among the second radio bearers. The second information is information indicating that the DRB is unable to perform uplink transmission, that is, information indicating that UL transmission of the subject DRB is prohibited (or stopped) or a cell group related to the DRB is in a deactivating state.

Moreover, the second information may be transmitted to the SDAP together with a part or whole of information as described below. Furthermore, the second information may be a part or whole of the information as described below.
- A DRB identifier of the subject DRB
- A QoS flow identifier that is associated with the subject DRB

Meanwhile, "transmission of the second information to the SDAP that is related to the DRB among the second radio bearers" may indicate that the terminal device 100 determines whether or not each of the DRBs meets at least the second condition, and transmits the second information to the SDAP that is related to the DRB when determining that the DRB meets at least the second condition.

Furthermore, "transmission of the second information to the SDAP that is related to the DRB among the second radio bearers" may indicate that the terminal device 100 determines whether or not each of the DRBs meets at least the second condition, and transmits the second information to the SDAP that is related to the DRB when determining that the DRB meets at least the second condition and determining that transmission of the second information to the SDAP that is related to the DRB is needed.

Meanwhile, "transmission of the second information to the SDAP that is related to the DRB among the second radio bearers" may be replaced with "transmission of the second information to the SDAP".

Furthermore, a process of transmitting the second information may be performed when the DRB that meets at least the second condition is related to the SDAP (if SDAP entity associated with this DRB is configured). The terminal device 100 may determine whether or not each of the DRBs is related to the SDAP, and determine whether the DRB meets at least the second condition when determining that the DRB is related to the SDAP. Moreover, the terminal device 100 may determine whether or not each of the DRBs meets at least the second condition, and determine whether the DRB is related to the SDAP when determining that the DRB meets at least the second condition.

RRC reconfiguration message receiving process in SCG deactivating state
FIG. 13 is a sequence diagram illustrating RRC message transmission-reception operation when the terminal device 100 is in the SCG deactivating state.

The base station device 200 transmits an RRC reconfiguration message (first message) to the terminal device 100 in the SCG deactivating state (Step S106). Meanwhile, transmission of the RRC reconfiguration message to the terminal device 100 in the SCG deactivating state may include transmission of the RRC reconfiguration message that includes a parameter (SCG deactivation instruction) for instructing the SCG to enter the deactivation state to the terminal device 100. When transmitting the RRC reconfiguration message including the SCG deactivation instruction, the SCG of the terminal device 100 may be in the activating state or the deactivating state. Meanwhile, the RRC reconfiguration message is an RRC message that is transmitted from the base station device 200 to the terminal device 100 and that is related to reconfiguration of the RRC connection, and performs establishment, configuration, change, and release of a radio bearer, a cell group, measurement information, or the like, synchronized reconfiguration, or the like. The RRC reconfiguration message may be, for example, RRCReconfiguration of the RRC message or a message with a different description.

The base station device 200 generates the RRC reconfiguration message and transmits the RRC reconfiguration message to the terminal device 100 when determining that a change pf the configuration of the terminal device 100 (change of the configuration in the RRC connected mode) is needed.

When, for example, it is needed to handover the MGC, the base station device 200 determines that the configuration of the terminal device 100 needs to be changed. Furthermore, when, for example, it is needed to change the security key, the base station device 200 determines that the configuration of the terminal device 100 needs to be changed. When it is needed to re-establish the PDCP related to the security key that needs to be changed (a key that is generated from the security key is to be used), the base station device 200 determines that the configuration of the terminal device 100 needs to be changed. Moreover, when, for example, it is needed to change a QoSflow to DRB mapping rule (a rule indicating a correspondence relationship (map) between the QoS flow and the DRB), the base station device 200 determines that the configuration of the terminal device 100 needs to be changed.

The RRC reconfiguration message includes information as described below, for example.
- Information that instructs to perform the SCG-synchronized reconfiguration
- Information that instructs to immediately performs the SCG-synchronized reconfiguration when the information that instructs to perform the SCG-synchronized reconfiguration is included and when at least the first condition is not met
- Information that instructs to immediately performs the SCG-synchronized reconfiguration at the time of the SCG (re)activation when the information that instructs to perform the SCG-synchronized reconfiguration is included and when at least the first condition is met

- Information that instructs to immediately performs the SCG-synchronized reconfiguration when the information that instructs to perform the SCG-synchronized reconfiguration is included and the state is the SCG deactivating state
- Information that instructs to immediately performs the SCG-synchronized reconfiguration at the time of the SCG (re)activation when the information that instructs to perform the SCG-synchronized reconfiguration is included

Meanwhile, the first condition is the same as the first condition that is used at Step S103. In other words, the first condition is that, for example, a part or whole the conditions from (condition 1-1) to (condition 1-4) as described above is met.

Furthermore, when the base station device 200 determines that it is prefer not to cause the terminal device 100 to immediately perform the SCG-synchronized reconfiguration, it may be possible not to include the synchronized reconfiguration parameter (not to request the SCG-synchronized reconfiguration) in a parameter indicating the SCG configuration (for example, with a description of secondaryCellGroup) in the RRC reconfiguration message.

Moreover, when the terminal device 100 is in the SCG deactivating state, the base station device 200 may determine that inclusion of the SCG-synchronized reconfiguration parameter in the RRC reconfiguration message sent to the terminal device 100 is optional (not needed). For example, when it is needed to update the security key of the secondary node, but when the terminal device 100 is in the SCG deactivating state and an RLC bearer of MN terminated (related to the master key) is not present on the SCG side, the base station device 200 does not include the SCG-synchronized reconfiguration parameter in the RRC reconfiguration message.

Furthermore, when at least a third condition is met and when the terminal device 100 is not in the SCG deactivating state, the base station device 200 may determine that it is needed to include the SCG-synchronized reconfiguration parameter in the RRC reconfiguration message sent to the terminal device 100, and always include the SCG-synchronized reconfiguration parameter. Moreover, even when at least the third condition is met, if the terminal device 100 is in the SCG deactivating state, the base station device 200 may determine that inclusion of the SCG-synchronized reconfiguration parameter in the RRC reconfiguration message sent to the terminal device 100 is optional (not needed), and need not include the SCG-synchronized reconfiguration parameter.

The third condition may be, for example, the AS security key that is generated from a security key (S-KgNB or S-KeNB) of the secondary node in NR-DC is changed or one or more radio bearers that use the secondary key is configured ion the terminal device 100 and the subject radio bearer is not released even if a process is performed due to reception of the RRC reconfiguration request.

Furthermore, the third condition may be that, for example, the base station device 200 handovers MN in (NG) EN-DC. Moreover, the third condition may be that, for example, the base station device 200 performs the SCG (re) activation.

Furthermore, when the RRC reconfiguration message to be sent to the terminal device 100 includes a change of the AS security key that is generated from the security key (KgNB or KeNB) of the master node and does not include the SCG-synchronized reconfiguration parameter, and if the terminal device 100 is not in the SCG deactivating state, the base station device 200 may determine that all of existing SCG RLC bearers related to the radio bearer that uses the master key are released.

Moreover, when the RRC reconfiguration message to be sent to the terminal device 100 includes a change of the AS security key that is generated from the security key (KgNB or KeNB) of the master node and does not include the SCG-synchronized reconfiguration parameter, and if the terminal device 100 is in the SCG deactivating state, the base station device 200 may determine that all of existing SCG RLC bearers related to the radio bearer that uses the master key need not be released.

Furthermore, the base station device 200 may include a parameter that instructs to perform the SCG-synchronized reconfiguration and a parameter that instructs to perform the SCG deactivation in the RRC reconfiguration message.

Meanwhile, the radio bearer that uses the master key may be a radio bearer for which the parameter (keyToUse) hat indicates whether to use the master key or the secondary key is set to master (or primary). Furthermore, the radio bearer that uses the secondary key may be a radio bearer for which the parameter (keyToUse) that indicates whether to use the master key or the secondary key is set to secondary.

Upon receiving the RRC reconfiguration message, the terminal device 100 performs an SCG deactivating state RRC message receiving process (Step S107). The terminal device 100 performs, in the SCG deactivating state RRC message receiving process, a process in accordance with the information (parameter) that is included in the RRC reconfiguration message.

The RRC reconfiguration message includes parameters as described below, for example.
- A synchronized reconfiguration parameter (instructing to perform the synchronized reconfiguration)
- A parameter that instructs the PDCP re-establishment (instructing to perform re-establishment of the PDCP)
- A parameter indicating configuration of a QoS flow to DRB mapping rule (instructing to perform reconfiguration of the QoS flow to DRB mapping rule)

A process in a case where each of the parameters is included will be described below.

### 1. Case in which synchronized reconfiguration parameter is included

When the received RRC reconfiguration message includes the synchronized reconfiguration parameter, and if a predetermined condition is met and the radio bearer on the SCG side is suspended, the terminal device 100 resumes uplink communication of the suspended radio bearer on the SCG side. The predetermined condition is that, for example, the state is not the SCG deactivating state. Meanwhile, "the predetermined condition is met" may be replaced with "determination on whether or not the predetermined condition is met and if it is determined that the predetermined condition is met".

Furthermore, the predetermined condition may be, for example, any of conditions from (condition 2-1) to (condition 2-3) below.

(Condition 2-1): a part or whole of conditions below is met.
- CellGroupConfig procedure (procedure) is initiated (initiate) by MCG configuration parameter and the state is not the SCG deactivating state
- The procedure is initiated by the SCG configuration parameter.

(Condition 2-2): a part or whole of conditions below is met.
- CellGroupConfig procedure (procedure) is initiated (initiate) by MCG configuration parameter and the state is not the SCG deactivating state.
- The procedure is initiated by the SCG configuration parameter, the state is the SCG deactivating state, and a parameter indicating that the SCG-synchronized reconfiguration is immediately performed is included (or a parameter indicating that the SCG-synchronized reconfiguration is not immediately performed is not included).
- The procedure is initiated by the SCG configuration parameter and the state is not the SCG deactivating state.

(Condition 2-3): a part or whole of conditions below is met.
- The state is not the SCG deactivating state.
- The state is the SCG deactivating state and a parameter indicating that the SCG-synchronized reconfiguration is immediately performed is included (or a parameter indicating that the SCG-synchronized reconfiguration is not immediately performed is not included).

Meanwhile, when the state is the SCG deactivating state, the terminal device 100 may determine that the radio bearer on the SCG side is in a different state (for example, a state in which the SCG is deactivated or a state in which uplink transmission is prohibited), instead of the suspended state. When the synchronized reconfiguration parameter is included, the terminal device 100 may resume uplink communication of the suspended radio bearer on the SCG side independently of whether or not the state is the SCG deactivating state.

Furthermore, when the received RRC reconfiguration message includes the SCG-synchronized reconfiguration parameter, the terminal device 100 may perform the following process.
- The terminal device 100 may immediately perform the SCG-synchronized reconfiguration process

Moreover, the terminal device 100 may be allowed not to immediately perform a part or whole of processes in the SCG-synchronized reconfiguration process, and may perform the processes, which are not immediately performed, at the time of the SCG (re)activation. Examples of the processes that are immediately performed include MAC reset on the SCG side and application (apply) of an identifier of a new terminal device 100 the identifier as the C-RNTI of the cell group. Furthermore, examples of the processes that are performed at the time of the SCG (re)activation include random access processing on the SCG side (may include a process of configuring a lower-level layer according to a received parameter that indicates common SpCell configuration (SpCellConfigCommon) and initiation of a timer for detecting a synchronized reconfiguration failure.

Meanwhile, the terminal device 100 may determine whether or not to immediately perform the SCG-synchronized reconfiguration process in accordance with the SCG deactivation instruction at Step S104 or the parameter (the parameter indicating whether or not to immediately perform he SCG-synchronized reconfiguration) that is included in the RRC reconfiguration message at Step S106. For example, the terminal device 100 may immediately perform the SCG-synchronized reconfiguration process when at least the first condition is not met, and may perform the SCG-synchronized reconfiguration process at the time of the SCG (re)activation when at least the first condition is met. Furthermore, the terminal device 100 may return to the SCG deactivating state again after performing the processes as described above.

Meanwhile, the first condition is the same as the first condition that is used at Step S103. In other words, the first condition is that, for example, a part or whole of the conditions from (condition 1-1) to (condition 1-4) as described above is met.

### 2. Case in which parameter instructing PDCP re-establishment is included

When, for example, the received RRC reconfiguration message includes the parameter that instructs the PDCP re-establishment, the terminal device 100 immediately performs the PDCP re-establishment. In this case, if data for which transmission is not completed is present in the PDCP of a part or all of the radio bearers that meet at least the second condition, the terminal device 100 may transmit the data after the SCG is (re)activated.

Furthermore, the terminal device 100 may perform PDCP re-establish for a part or all of the radio bearers that meet at least the second condition after the SCG is (re)activated. In this case, the PDCP for which the PDCP re-establishment is performed after the SCG (re)activation does not perform a process corresponding to a PDCP SDU even when receiving the PDCP SDU from the higher-level layer.

Meanwhile, the second condition is the same as the second condition that is used at Step S105, that is, the radio bearer is an SCG bearer or the radio bearer is a split bearer and a primary path is configured in the SCG.

Furthermore, in the process of transmitting data for which transmission is not completed in the PDCP and in the case of the UM DRB, for example, the terminal device 100 regards a PDCP SDU to which a sequence number is assigned but which is not handed over to the lower-level layer as a PDCP SDU that is just received from the higher-level layer, and transmits the PDCP SDU in order. At this time, it is not always needed to restart the discard timer.

Moreover, in the process of transmitting data for which transmission is not completed in the PDCP, when, for example, the AM DRB or the AM DRB for which the PDCP entity is not suspended is used, the terminal device 100 transmits, in order, a PDCP SDU for which successful transmission from the lower-level layer is not confirmed and a PDCP SDU for which a sequence number is assigned but which is not handed over to the lower-level layer.

Furthermore, in the process of transmitting data for which transmission is not completed in the PDCP, when, for example, the AM DRB for the Uu interface for which a PDCP entity is suspended is used, the terminal device 100 regards a PDCP SDU for which successful transmission from the lower-level layer is not confirmed and a PDCP SDU for which a sequence number is assigned but which is not handed over to the lower-level layer as PDCP SDUs that are just received from the higher-level layer, and transmits the PDCP SDUs in order. At this time, it is not always needed to restart the discard timer.

Meanwhile, the discard timer may be a timer that is used, at the time of expiry, to discard a subject PDCP SDU.

The base station device 200 may include, in the RRC reconfiguration message at Step S106, a parameter indicating that a re-establishment process of the PDCP of a part or all of the radio bearers that meet at least the second condition is to be immediately performed (or to be performed after the SCG is (re)activated). The terminal device 100 may determine, from the parameter, whether to immediately perform the re-establishment process on the PDCP of a part or all of the radio bearers that meet at least the second condition or perform the re-establishment process after the SCG is (re)activated.

### 3. Case in which parameter indicating configuration of QoS flow to DRB mapping rule is included

The terminal device 100 performs a process as described below when the received RRC reconfiguration message includes a parameter (mappedQoS-FlowToAdd) that indicates configuration of the QoS flow to DRB mapping rule. Meanwhile, the QoS flow to DRB mapping rule indicates, for example, a corresponding relationship between the QoS flow and the DRB.

The terminal device 100 performs an end-marker process when a predetermined condition is met. The end-marker process is a process of constructing an end-marker control PDU, mapping the end-marker control PDU to a DRB that is adopted before change, and transmits the end-marker control PDU to the lower-level layer. Meanwhile, "when the predetermined condition is met" may be replaced with the following phrase: "determine whether or not the predetermined condition is not and when the predetermination condition is met".

Here, for example, it is assumed that mappedQoS-FlowToAdd that is included in the received RRC reconfiguration message is a parameter corresponding to a first QoS flow.

When a part or whole of conditions from (condition 3-1) to (condition 3-3) below is met, and if a DRB of the QoS flow to DRB mapping rule that is stored for the first QoS flow (that is, the DRB that corresponds to the first QoS flow that is already stored) is a DRB that does not correspond to the second information that is received from the RRC of the terminal device 100 at Step S105, the terminal device 100 performs the end-marker process. Furthermore, even when a part or whole of the conditions from (condition 3-1) to (condition 3-3) below is met, if the DRB of the QoS flow to DRB mapping rule that is stored for the first QoS flow is a DRB that corresponds to the second information that is received from the RRC of the terminal device 100 at Step, the terminal device 100 does not perform the end-marker process.

(Condition 3-1): the SDAP related to the data radio bearer that meets at least the second condition is notified of the second information at Step S105.

(Condition 3-2): the QoS flow to DRB mapping rule that is stored for the first QoS flow is different from the configured QoS flow to DRB mapping rule (that is configured by mappedQoS-FlowToAdd included in the received RRC reconfiguration message). In other words, the DRB that is associated with the first QoS flow by a newly-received QoS flow to DRB mapping rule is changed from the DRB that is associated by the stored (already received) QoS flow to DRB mapping rule.

(Condition 3-3): an uplink SDAP header is configured in the DRB of the stored QoS flow to DRB mapping rule.

Moreover, when an SDAP entity is already established and a default DRB is configured while the QoS flow to DRB mapping rule for the first QoS flow is not present (is not stored), the terminal device 100 may perform a part or whole of processes as described below.

(Process 1) when the default DRB is a DRB that does not correspond to the second information that is received from the RRC of the terminal device 100 at Step S105, an end-marker control PDU is constructed, mapped to the default DRB, and transmitted to the lower-level layer.

(Process 2) when the default DRB is a DRB that corresponds to the second information that is received from the RRC of the terminal device 100 at Step S105, a part or whole of construction of an end-marker control PDU, mapping of the end-marker control PDU to the default DRB, and transmission of the end-marker control PDU to the lower-level layer is not performed.

Meanwhile, the QoS flow to DRB mapping rule may be a QoS flow to DRB mapping rule for uplink (UL QoS flow to DRB mapping rule).

Furthermore, when the second notice is given from the RRC of the terminal device 100 to the PDCP at Step S105 (when it is recognized that the PDCP is the PDCP of the radio bearer that meets at least the second condition), the terminal device 100 generates an end-marker control PDU (SDAP Control PDU) and transmits the SDAP Control PDU to the PDCP. Upon receiving the SDAP Control PDU, the PDCP of the terminal device 100 discards the received SDAP Control PDU. Alternatively, the PDCP of the terminal device 100 may discard the SDAP Control PDU when the SDAP Control PDU is a split bearer and the primary path is configured in the SCG.

Meanwhile, the base station device 200 may be configured so as not to transmit the end-marker control PDU to the SCG when the terminal device 100 is in the SCG deactivating state. For example, the base station device 200 does not include mappedQoS-FlowToAdd in the RRC reconfiguration message that is to be transmitted to the terminal device 100 when the terminal device 100 is in the SCG deactivating state. Furthermore, for example, when the base station device 200 includes mappedQoS-FlowToAdd in the RRC reconfiguration message that is to be transmitted to the terminal device 100 when the terminal device 100 is in the SCG deactivating state, the base station device 200 performs configuration such that the terminal device 100 does not transmit the end-marker control PDU to the SCG side.

Moreover, when determining that it is difficult to perform a process in accordance with the RRC reconfiguration message that is received from the base station device 200, the terminal device 100 may activate a procedure for re-establishment of the RRC connection or a procedure related to a radio link failure (RLF) of the SCG with respect to the base station device 200. For example, when the RRC reconfiguration message that is received from the base station device 200 needs a synchronized reconfiguration parameter but does not include the synchronized reconfiguration parameter, the terminal device 100 determines that it is difficult to perform the process in accordance with the received RRC reconfiguration message. Furthermore, for example, when the terminal device 100 is in the SCG deactivating state, and if transmission of an end marker to the SCG occurs due to the RRC reconfiguration message that is received from the base station device 200, the terminal device 100 determines that it is difficult to perform the process in accordance with the received RRC reconfiguration message.

### Arrival of UL data in SCG deactivating state

FIG. 14 is a sequence diagram illustrating SCG reactivation operation in the SCG deactivating state. In some cases, UL data arrives while the terminal device 100 is in the SCG deactivating state (Step S108). Arrival of the UL data indicates occurrence of data to be transmitted to the base station device 200, and may be, for example, arrival (transmission) of the PDCP SDU at the PDCP or arrival (transmission) of an MAC SDU on the SCG side.

When the UL data arrives, the terminal device 100 performs an SCG deactivating state UL data transmission process (Step S109). The SCG deactivating state UL data transmission process is a process for determining whether to immediately transmit the UL data to the master node or the secondary node. The SCG deactivating state UL data transmission process will be described below for a case in which the PDCP SDU arrives at the PDCP and for a case in which the MAC SDU arrives at the MAC on the SCG side.

### 1. Case in which PDCP SDU arrives at PDCP

When the RRC of the terminal device 100 gives the second notice to the PDCP (when the PDCP recognizes that the radio bearer meets at least the second condition) the PDCP of the terminal device 100 that has detected arrival of the PDCP SDU notifies the RRC of the terminal device 100 of occurrence of UL data. Here, when the split bearer is established and the primary path is present in the SCG, the terminal device 100 may give a notice to the RRC of the terminal device 100 at the time of receiving the PDCP SDU from the higher-level layer. In contrast, when the split bearer is established and the primary path is present in the MCG, the terminal device 100 may give a notice to the RRC of the terminal device 100 when the transmission data amount exceeds or is likely to exceed a predetermined threshold.

The RRC of the terminal device 100 that has received the notice of occurrence of the UL data from the PDCP of the terminal device 100 transmits an SCG reactivation request to the base station device 200 (Step S110). The SCG reactivation request may be a message for requesting to perform the SCG (re)activation or a message that includes a parameter for requesting to perform the SCG (re) activation.

Furthermore, the SCG reactivation request is, for example, an RRC message. Moreover, the SCG reactivation request may be, for example, an SCG reactivation request of the RRC message or a message with a different description.

### 2. Case in which MAC SDU arrives at MAC on SCG side

The RRC of the terminal device 100 performs the same process as the process that is performed when the PDCP SDU arrives at the PDCP as described above. When detecting arrival of the MAC SDU, the MAC of the terminal device 100 notices the RRC of the terminal device 100 of occurrence of the UL data. Furthermore, the MAC of the terminal device 100 may perform the SCG (re)activation and prepare for transmission of the UL data (for example, execution of a random access procedure for the secondary node). If the SCG-synchronized reconfiguration that is not immediately performed at Step S107 or the like is present, the terminal device 100 may perform the SCG-synchronized reconfiguration in advance. Moreover, the MAC of the terminal device 100 may perform all of processes related to the SCG (re)activation after reception of the SCG reactivation instruction from the base station device 200.

Moreover, the MAC of the terminal device 100 may perform the SCG (re)activation and start transmission of the UL data without giving a notice of occurrence of the UL data to the RRC of the terminal device 100. If the SCG-synchronized reconfiguration that is not immediately performed at Step S107 or the like is present, the terminal device 100 may perform the SCG-synchronized reconfiguration before starting transmission of the UL data.

If, for example, the SCG deactivation instruction that is received at Step S104 includes an instruction related to a process that is to be performed when UL data occurs in the SCG deactivating state (for example, whether or not it is allowed to perform the SCG (re)activation without transmission of the SCG reactivation request), the terminal device 100 may follow the instruction.

The base station device 200 determines whether or not the SCG (re)activation of the terminal device 100 is needed. The base station device 200 determines that the SCG (re)activation of the terminal device 100 is needed when a part or whole of conditions from (condition 4-1) to (condition 4-3) below is met, for example.

(Condition 4-1): the SCG reactivation request is received from the terminal device 100.

(Condition 4-2): DL data to be transmitted to the terminal device 100 via the SCG has occurred.

(Condition 4-3): an amount of remaining radio resources of the secondary node is adequate (equal to or larger than a predetermined threshold).

Meanwhile, the base station device 200 can determine whether or not the SCG reactivation of the terminal device 100 is needed at any time as long as the terminal device 100 is in the SCG deactivating state.

When determining that the SCG (re)activation is needed, the base station device 200 transmits an SCG reactivation instruction for instructing (permitting) to perform the SCG (re)activation to the terminal device 100 (Step S111). The SCG reactivation instruction is, for example, an RRC message. Furthermore, the SCG reactivation instruction may be, for example, an RRC reconfiguration message or a message with a different description. Moreover, the SCG reactivation instruction may be an RRC reconfiguration message that does not include the SCG deactivation instruction.

Upon receiving the SCG reactivation instruction, the terminal device 100 performs the SCG reactivation process (Step S112). The SCG reactivation process is a process of re(activating) the SCG by the terminal device 100.

Meanwhile, the RRC of the terminal device 100 may transmit a third notice to the PDCP to which the second notice is transmitted at Step S105. The third notice may be a notice indicating that the SCG (re)activation is to be performed or a notice indicating that the SCG deactivation it to be released; for example, a notice indicating that "the SCG is (re)activated" or "uplink transmission of the SCG is permitted (resumed)". Upon receiving the third notice, the PDCP of the terminal device 100 resumes the uplink transmission of the SCG.

### RRC message process while SCG-side radio bearer is being suspended

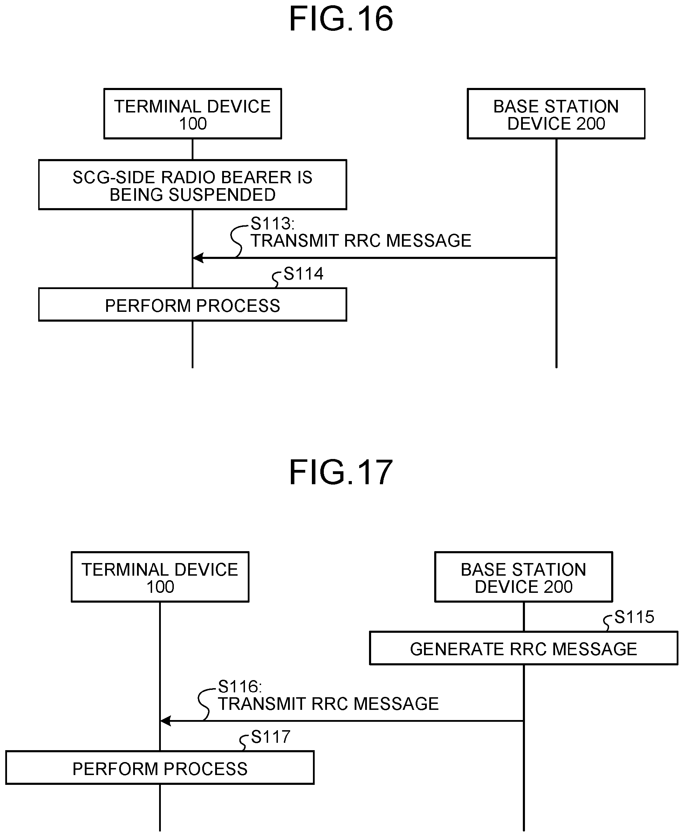

FIG. 16 is a sequence diagram illustrating RRC message transmission-reception operation while at least the SCG-side radio bearer of the terminal device 100 is being suspended (the radio bearer is being suspended). At least the SCG-side radio bearer of the terminal device 100 is being suspended may indicate, for example, a case in which the terminal device 100 is in the RRC inactive mode. Further, at least the SCG-side radio bearer of the terminal device 100 is being suspended may indicate that, for example, the terminal device 100 detects an SCG failure and the SCG transmission of the radio bearer is in the suspended state. Furthermore, the radio bearer is being suspended indicates, for example, a part or all of a state in which the radio bearer does not perform transmission, a state in which the radio bearer does not perform reception, and a state in a part or whole of entities configured in the radio bearer does not perform data processing. Moreover, the SCG transmission of the radio bearer is being suspended may indicate a state that includes for example, a state in which a radio bearer associated with the SCG does not perform transmission.

Furthermore, the terminal device 100 for which at least the SCG-side radio bearer is being suspended may be in the SCG deactivating state. Moreover, the terminal device 100 for which at least the SCG-side radio bearer is being suspended may be in the SCG (re)activating state.

Furthermore, the RRC message may be the RRC resume message when the terminal device 100 is in the RRC inactive mode. In this case, the terminal device 100 may transmit the RRC resume request message to the base station device 200 before receiving the RRC message from the base station device 200. Moreover, the RRC message may be the RRC reconfiguration message when the terminal device 100 is in the RRC connected mode. Meanwhile, the RRC resume message may include the RRC reconfiguration message, and the RRC reconfiguration message may include the SCG configuration.

The base station device 200 transmits the RRC message to the terminal device 100 for which at least the SCG-side radio bearer is being suspended (Step S113). When determining that the terminal device 100 resumes the transmission by the suspended SCG-side radio bearer, the base station device 200 includes a tenth parameter in the RRC message without including an eleventh parameter and transmits the RRC message to the terminal device 100. Further, when determining that the terminal device 100 does not resume the transmission by the suspended SCG-side radio bearer, the base station device 200 includes the tenth parameter and the eleventh parameter in the RRC message and transmits the RRC message to the terminal device 100.

Meanwhile, "resumes the transmission by the suspended SCG-side radio bearer" as described above may be replaced with a phrase of "resumes the transmission by the suspended SCG-side radio bearer and performs random access to the SCG". Furthermore, "does not resume the transmission by the suspended SCG-side radio bearer" as described above may be replaced with a phrase of "does not resume the transmission by the suspended SCG-side radio bearer and does not perform random access to the SCG".

The terminal device 100 for which at least the SCG-side radio bearer is being suspended performs a process in accordance with the RRC message that is received from the base station device 200 (Step S114). The terminal device 100 for which at least the SCG-side radio bearer is being suspended, when the RRC message that is received from the base station device 200 includes the tenth parameter and does not include the eleventh parameter, determines that the transmission by the suspended SCG-side radio bearer is to be resumed, and resumes the transmission by the suspended SCG-side radio bearer. Furthermore, the terminal device 100 for which at least the SCG-side radio bearer is being suspended, when the RRC message that is received from the base station device 200 includes the tenth parameter and the eleventh parameter, determines that the transmission by the suspended SCG-side radio bearer is not resumed, and does not resume the transmission by the suspended SCG-side radio bearer.

Meanwhile, "the RRC message that is received from the base station device 200 includes the tenth parameter and does not include the eleventh parameter" may be replaced with the following phrase: "the RRC message that is received from the base station device 200 includes the tenth parameter, and the SCG is not deactivated" or "the RRC message that is received from the base station device 200 includes the tenth parameter, and the SCG is (re)activated". Furthermore, "the RRC message that is received from the base station device 200 includes the tenth parameter and the eleventh parameter" may be replaced with the following phrase: "the RRC message that is received from the base station device 200 includes the tenth parameter, and the SCG is deactivated" or "the RRC message that is received from the base station device 200 includes the tenth parameter and the SCG is not (re)activated".

Meanwhile, "resumes the transmission by the suspended SCG-side radio bearer" as described above may be replaced with a phrase of "resumes transmission by the suspended SCG-side radio bearer, and performs random access to the SCG". Furthermore, "does not resume the transmission by the suspended SCG-side radio bearer" as described above may be replaced with a phrase of "does not resume the transmission by the suspended SCG-side radio bearer and does not perform random access to the SCG".

Moreover, the tenth parameter as described above may be the synchronized reconfiguration parameter. Furthermore, the tenth parameter as described above may be the SCG-synchronized reconfiguration parameter. Furthermore, the eleventh parameter as described above may be the SCG deactivation instruction. The SCG deactivation instruction may be a parameter that instructs the terminal device 100 to perform the SCG deactivation. Moreover, the SCG deactivation instruction may be a parameter indicating that the SCG of the terminal device 100 is in the deactivate state. Furthermore, the SCG deactivation instruction may be a parameter of scg-state.

Meanwhile, the process of "resuming the transmission by the suspended SCG-side radio bearer" or the process of "not resuming the transmission by the suspended SCG-side radio bearer" as described above may be performed after the synchronized reconfiguration process is performed. Furthermore, the process of "resuming the transmission by the suspended SCG-side radio bearer" or the process of "not resuming the transmission by the suspended SCG-side radio bearer" as described above may be perform after the process of resuming the suspended radio bearer is performed or at the same time as the process of resuming the suspended radio bearer. Moreover, the process of resuming the suspended radio bearer may be, for example, a process of resuming data processing in each of the entities the radio bearer. Furthermore, the process of resuming the suspended radio bearer need not be performed on a part of the suspended radio bearers. The part of the suspended radio bearers may be, for example, the SRB with respect to the source cell group.

Moreover, the process of "not resuming the transmission by the suspended SCG-side radio bearer" may be performed after the SCG deactivation process.

Meanwhile, the SCG-side radio bearer may be the radio bearer that is associated with the SCG.

Furthermore, the same process as the process performed on the SCG-side radio bearer as described above may be performed on a Backhaul (BH) RLC channel for Integrated Access and Backhaul (IAB)-Mobile termination (MT) on the SCG side. In other words, when it is determined that "the transmission by the suspended SCG-side radio bearer is to be resumed", it may be possible to resume the SCG transmission on the BH RLC channel on the suspended IAB-MT. Moreover, when it is determined that "the transmission by the suspended SCG-side radio bearer is not to be resumed", it is not needed to resume the SCG transmission on the BH RLC channel on the suspended IAB-MT.

With this configuration, it is possible to prevent data transmission in the SCG deactivating state, and reduce power consumption of the terminal device.

Meanwhile, the terminal device 100 for which at least the SCG-side radio bearer is being suspended may perform processes as described below, instead of the process of determining whether or not to resume the transmission by the suspended SCG-side radio bearer.
- When the RRC message includes the synchronized reconfiguration, the transmission by the suspended SCG-side radio bearer is resumed regardless of whether or not the RRC message includes the SCG deactivation instruction.
- After the process of resuming the transmission by the suspended SCG-side radio bearer, the SCG deactivation process and/or the synchronized reconfiguration process is performed.

### RRC message process for controlling uplink transmission of Control PDU

When the terminal device 100 receives the RRC message that includes the DRB configuration parameter, and if the DRB configuration parameter includes the parameter that instructs the PDCP re-establishment or the parameter that instructs the PDCP data recovery and if the PDCP status report transmission is configured in the DRB corresponding to the DRB configuration, the PDCP entity in the DRB corresponding to the DRB configuration of the terminal device 100 (the DRB with the same DRB identifier as the DRB identifier that is included in the DRB configuration parameter) transmits the PDCP status report in the uplink direction. Furthermore, when the DRB is the SCG bearer or the split bearer and the primary path is configured in the SCG, and if the RRC message as described above includes the SCG deactivation instruction, the terminal device 100 needs to perform a process of turning the SCG to the (re)activation state to turn the SCG to the deactivation state once and thereafter transmit the PDCP status report, and electric power is consumed. To avoid the problem as described above, the base station device 200 may cause the terminal device 100 to refrain from transmitting the Control PDU and/or the data PDU, such as the PDCP status report, when the terminal device 100 is in the SCG deactivating state. Moreover, to prevent the problem as described above, the terminal device 100 may refrain from transmitting the Control PDU and/or the data PDU, such as the PDCP status report, when the terminal device 100 is in the SCG deactivating state.

An example of the process will be described below with reference to FIG. 17. FIG. 17 is a sequence diagram illustrating RRC message transmission-reception operation for controlling uplink transmission of the Control PDU.

The base station device 200 performs a process of generating the RRC message that is to be transmitted to the terminal device 100 (Step S115). The RRC message as described above may be, for example, the RRC reconfiguration message, the RRC resume message, the RRC connection reconfiguration message, or other messages.

A first example of the process at Step S115 will be described. When the base station device 200 causes the SCG of the terminal device 100 to enter the deactivation state and gives an instruction to perform the PDCP re-establishment and/or the PDCP data recovery to the first DRB that is established in the terminal device 100 by transmitting the RRC message to the terminal device 100, the base station device 200 determines that the configuration of the PDCP status report transmission that is configured in the first DRB as described above is to be released. Furthermore, the base station device 200 may generate an RRC message indicating that the configuration of the PDCP status report transmission that is configured in the first DRB as described above it to be released. To release the configuration of the PDCP status report transmission that is configured in the first DRB as described above may be to include the DRB configuration parameter for the first DRB as described above in the RRC message, to further include the PDCP configuration parameter in the DRB configuration parameter, and not to include a parameter (statusReportRequired) for configuring the PDCP status report transmission in the PDCP configuration parameter. In other words, it may be possible to include the DRB configuration parameter for the first DRB as described above in the RRC message and include the PDCP configuration parameter that does not include a parameter for configuring the PDCP status report transmission in the DRB configuration parameter. Moreover, the process of releasing the configuration of the PDCP status report transmission for the first DRB as described above may be performed when the PDCP status report transmission is configured in the first DRB as described above. Meanwhile, the first example of the process at Step S115 may be performed at the time of first transmission of the RRC reconfiguration message or at the time of first transmission of the RRC resume message after the SCG of the terminal device 100 is changed from the (re)activation state to the deactivation state.

A second example of the process at Step S115 will be described below. When the base station device 200 instructs the first DRB that is established in the terminal device 100 to perform the PDCP re-establishment and/or the PDCP data recovery by transmitting the RRC message to the terminal device 100, the base station device 200 may determine that the SCG of the terminal device 100 is caused to enter the (re)activation state and generate an RRC message indicating that the SCG of the terminal device 100 is to be changed to the (re)activation state.

A third example of the process at Step S115 will be described below. When the base station device 200 causes the SCG of the terminal device 100 to enter the deactivation state by transmitting the RRC message to the terminal device 100, the base station device may determine that an instruction to perform the PDCP re-establishment and/or the PDCP data recovery is not given to the first DRB that is established in the terminal device 100 and generate an RRC message indicating that an instruction to perform the PDCP re-establishment and/or the PDCP data recovery is not given to the first DRB as described above.

In each of the examples of the process as described above, "the SCG of the terminal device 100 is caused to enter the deactivation state" may be to include the SCG deactivation instruction in the RRC message. Furthermore, "the SCG of the terminal device 100 is caused to enter the (re)activation state" may be not to include the SCG deactivation instruction in the RRC message. Moreover, "instructs the first DRB that is configured in the terminal device 100 to perform the PDCP re-establishment" may be to include, in the RRC message, a DRB configuration parameter (a DRB configuration parameter that includes the same DRB identifier as the first DRB) for the first DRB that is configured in the terminal device 100, and to include, in the DRB configuration, a parameter (reestablish PDCP) that instructs the PDCP re-establishment. Furthermore, "instructs the first DRB that is configured in the terminal device 100 to perform the PDCP data recovery" may be to include, in the RRC message a DRB configuration parameter for the first DRB that is configured in the terminal device 100, and to include, in the DRB configuration, a parameter (recover PDCP) that instructs the PDCP data recovery. Moreover, "an instruction to perform the PDCP data recovery is not given to the first DRB that is configured in the terminal device 100" may be not to include, in the RRC message, the DRB configuration parameter for the first DRB that is established in the terminal device 100, or may be to include, in the RRC message, the DRB configuration parameter for the first DRB that is established in the terminal device 100 and not to include, in the DRB configuration, the parameter (recover PDCP) that instructs the PDCP data recovery. Meanwhile, the first DRB may be a DRB that is associated with the SCG of the terminal device 100. Furthermore, the DRB that is associated with the SCG may be a DRB that is an SCG bearer. Moreover, the DRB that is associated with the SCG may be a DRB that is a split bearer or may be a DRB which is the split bearer and for which the primary path is configured in the SCG. Furthermore, the first DRB may be an AM DRB.

The base station device 200 transmits the RRC message that is generated at Step S115 to the terminal device 100 (Step S116). The terminal device 100 performs a process in accordance with the RRC message that is received from the base station device 200 (Step S117).

A first example of the process at Step S117 will be described. When the RRC message that is received from the base station device 200 includes the SCG deactivation instruction and the DRB configuration for the first DRB that is established in the terminal device 100 includes the parameter that instructs the PDCP re-establishment and/or the parameter that instructs the PDCP data recovery, and even if the PDCP status report transmission is configured in the first DRB, the terminal device 100 determines that the PDCP status report is not to be transmitted and does not transmit the PDCP status report.

A second example of the process at Step S117 will be described. When the RRC message that is received from the base station device 200 includes the SCG deactivation instruction and the DRB configuration for the first DRB that is established in the terminal device 100 includes the parameter that instructs the PDCP re-establishment and/or the parameter that instructs the PDCP data recovery, and even if the PDCP status report transmission is configured in the first DRB, the terminal device 100 determines that the PDCP status report is to be transmitted after the SCG (re)activation, and transmits the PDCP status report after the SCG (re)activation.

In the process at Step S117, the first DRB may be a DRB that is associated with the SCG of the terminal device 100. Furthermore, the DRB that is associated with the SCG may be a DRB that is an SCG bearer. Moreover, the DRB that is associated with the SCG may be a split bearer or may be a DRB which a split bearer and for which the primary path is configured in the SCG. Furthermore, the first DRB may be an AM DRB.

### Second Embodiment

A case will be described in which, when the terminal device 100 is in the SCG deactivating state, in the SDAP entity of the terminal device 100, an RDI (Reflective QoS flow to DRB mapping Indication) is set to "1", a downlink SDAP data PDU is received, and the received downlink SDAP data PDU includes a QoS flow identifier (QFI) of a second QoS flow. Meanwhile, the downlink SDAP data PDU may be received by a DRB for which an RLC bearer is associated with the MCG.

When a part or whole of conditions from (condition 5-1) to (condition 5-3) below is met, and if a DRB of a QoS flow to DRB mapping rule that is stored for the second QoS flow (that is, a DRB that corresponds to the already stored first QoS flow) is a DRB that does not correspond to the second information received from the RRC of the terminal device 100 in the first embodiment as described above, the terminal device 100 performs the end-marker process. Furthermore, even when a part or whole of the conditions from (condition 5-1) to (condition 5-3) below is met, if the DRB of the QoS flow to DRB mapping rule that is stored for the second QoS flow is a DRB that corresponds to the second information received from the RRC of the terminal device 100, the terminal device 100 does not perform the end-marker process. Meanwhile, the end-marker process is a process of constructing an end-marker control PDU, mapping the end-marker control PDU to a DRB that is adopted before change, and transmits the end-marker control PDU to the lower-level layer.

(Condition 5-1): the SDAP associated with the DRB that meets at least the second condition is notified of the second information at Step S105 in the first embodiment as described above.

(Condition 5-2): the QoS flow to DRB mapping rule that is stored for the first QoS flow is different from the received QoS flow to DRB mapping rule of the downlink SDAP data PDU. In other words, the DRB that is associated with the second QoS flow by the QoS flow to DRB mapping rule that is newly received by the downlink SDAP data PDU is changed from the DRB that is associated by the stored QoS flow to DRB mapping rule.

(Condition 5-3): an uplink SDAP header is configured in the DRB of the stored QoS flow to DRB mapping rule.

Furthermore, when the QoS flow to DRB mapping rule for the second QoS flow is not present (is not stored) and the default DRB is configured, the terminal device 100 may perform a part or whole of processes as described below.

(Process 1) when the default DRB is a DRB that does not correspond to the second information received from the RRC of the terminal device 100 in the first embodiment as described above, the end-marker control PDU is constructed, mapped to the default DRB, and transmitted to the lower-level layer.

(Process 2) when the default DRB is a DRB that corresponds to the second information received from the RRC of the terminal device 100 in the first embodiment as described above, a part or whole of construction of an end-marker control PDU, mapping of the end-marker control PDU to the default DRB, and transmission of the end-marker control PDU to the lower-level layer is not performed.

Meanwhile, the QoS flow to DRB mapping rule may be a QoS flow to DRB mapping rule for uplink (UL QoS flow to DRB mapping rule).

When the terminal device 100 receives the RRC reconfiguration message, and if the RRC reconfiguration message includes the SCG-synchronized reconfiguration parameter, the terminal device 100 determines whether or not to immediately perform a part or whole of the SCG-synchronized reconfiguration process. When determining that a part or whole of the SCG-synchronized reconfiguration process is not to be immediately performed, the terminal device 100 performs the SCG-synchronized reconfiguration process that is not yet performed, at the time of the SCG (re)activation. The terminal device 100 determines that the process is not to be immediately performed when, for example, a part or whole of conditions as described below is met.
- The state is in the SCG deactivating state
- The SCG-synchronized reconfiguration is due to a change of a security key (KgNB or KeNB) of the master node or a change of an AS security key that is generated from the security key of the master node.
- The SCG-synchronized reconfiguration is due to a change of a security key (S-KgNB or S-KeNB) of the secondary node or a change of the AS security key that is generated from the security key of the secondary node.
- A radio bearer that is related to the SCG RLC bearer does not include a radio bearer that uses the master key.
- All of radio bearers that are related to the SCG RLC bearer use the secondary key.
- An instruction of execution at the time of the SCG (re)activation is given from the base station device 200.

With this configuration, it is possible to prevent execution of the SCG (re)activation due to immediate execution of the SCG-synchronized reconfiguration, so that it is possible to reduce power consumption of the terminal device 100.

Furthermore, when the base station device 200 determines that it is prefer not to cause the terminal device 100 to immediately perform the SCG-synchronized reconfiguration, the base station device 200 does not include the synchronized reconfiguration parameter in the SCG configuration parameter of the RRC reconfiguration message. The base station device 200 determines that it is prefer not to immediately perform the SCG-synchronized reconfiguration when, for example, a part or whole of conditions as described below is met.
- The state is the SCG deactivating state
- The SCG-synchronized reconfiguration is due to a change of a security key (KgNB or KeNB) of the master node or a change of an AS security key that is generated from the security key of the master node.
- The SCG-synchronized reconfiguration is due to a change of a security key (S-KgNB or S-KeNB) of the secondary node or a change of the AS security key that is generated from the security key of the secondary node.
- A radio bearer that is related to the SCG RLC bearer does not include a radio bearer that uses the master key.
- All of radio bearers that are related to the SCG RLC bearer use the secondary key.

Meanwhile, the radio bearer that uses the master key may be a radio bearer for which the parameter (keyToUse) that indicates whether to use the master key or the secondary key is set to master (or primary). Furthermore, the radio bearer that uses the secondary key may be a radio bearer for which the parameter (keyToUse) that indicates whether to use the master key or the secondary key is set to secondary.

With this configuration, it is possible to prevent execution of the SCG (re)activation due to execution of the synchronized reconfiguration, so that it is possible to reduce power consumption of the terminal device 100.

Moreover, the RRC reconfiguration message that is received from the base station device 200 in the SCG deactivating state includes an MCG-synchronized reconfiguration parameter but does not include the SCG-synchronized reconfiguration, the terminal device 100 does not resume uplink transmission of the SCG.

With this configuration, it is possible to prevent execution of the SCG (re)activation due to execution of the synchronized reconfiguration, so that it is possible to reduce power consumption of the terminal device 100.

Furthermore, when receiving the SCG deactivation instruction from the base station device 200, the terminal device 100 performs (process A) on the radio bearer that meets (condition A).

(Condition A) is that a radio bearer is the SCG bearer or the split bearer and the primary path is set in the SCG.

(Process A) is a process of immediately transmitting or discarding data for which transmission is not completed in the PDCP entity of the radio bearer that meets (condition A). Furthermore, when a re-establishment request for the PDCP entity of the radio bearer that meets (condition A) is issued, (process A) may be a process of transmitting data for which transmission is not completed at the time of the SCG (re)activation (or after the SCG (re)activation) rather than immediately transmitting the data in the process of re-establishing the PDCP entity. Moreover, (process A) is a process of discarding an SDAP Control PDU when the PDCP entity of the radio bearer that meets (condition A) receives the SDAP Control PDU.

With this configuration, it is possible to prevent execution of the SCG (re)activation due to occurrence of uplink transmission, so that it is possible to reduce power consumption of the terminal device 100.2

Moreover, the RRC of the terminal device 100, upon receiving the SCG deactivation instruction from the base station device 200, notifies the SDAP that is associated with the radio bearer (DRB) that meets (condition A) of (information A).

(Information A) is information indicating a state in which the DRB is unable to perform uplink transmission, such as a state in which uplink transmission of the DRB is prohibited (stopped) or a state in which a cell group related to the DRB is in a deactivating state.

With this configuration, it is possible to prevent execution of the SCG (re)activation due to occurrence of uplink transmission, so that it is possible to reduce power consumption of the terminal device 100.

Furthermore, when, in the SDAP, the DRB corresponding to the first QoS flow is changed and the DRB that is adopted before the change is the DRB that is notified by the RRC, the terminal device 100 does not transmit an SDAP control SDU to the DRB that is adopted before the change.

Moreover, when the terminal device 100 is in the SCG deactivating state, the base station device 200 may prevent occurrence of the end marker. The base station device 200 performs control of preventing occurrence of the end marker by performing, for example, control of preventing re-association of the QoS flow that is associated with the certain DRB, which is the SCG bearer or which is the split bearer and for which the primary path is configured, in the SCG in the SCG deactivating state, with a different DRB. Furthermore, the base station device 200 performs control of preventing occurrence of the end marker by performing, for example, control of associating a part or whole of the QoS flow that is associated with the DRB that meets at least the second condition, with a DRB that does not meet at least the second condition before the SCG deactivation instruction at Step S104 in the first embodiment as described above or in the SCG deactivation instruction

With this configuration, it is possible to prevent execution of the SCG (re)activation due to occurrence of the uplink transmission, so that it is possible to reduce power consumption of the terminal device 100.

Moreover, when the UL data occurs (arrives), the terminal device 100 may be instructed by the base station device 200, whether an SCG (re)activation request is issued to the base station device 200 or the terminal device 100 spontaneously performs the SCG (re)activation. In other words, the terminal device 100 performs a process as described below, for example.

The RRC of the terminal device 100, upon receiving the SCG deactivation instruction from the base station device 200, transmits (notice A) to the PDCP entity of the radio bearer that meets (condition A). (Notice A) is a notice indicating that the state is the SCG deactivating state or uplink transmission on the SCG side is prohibited (interrupted). When the PDCP entity of the radio bearer that meets (condition A) receives data from the higher-level layer, the PDCP entity of the terminal device 100 entity notifies the RRC of the terminal device 100 of occurrence of the UL data. The RRC of the terminal device 100 generates the SCG reactivation request and transmits the SCG reactivation request to the base station device 200. The RRC of the terminal device 100, upon receiving the SCG reactivation instruction from the base station device 200, gives a notice indicating that the SCG is (re)activated or the uplink transmission on the SCG side is started (resumed) to the PDCP entity of the radio bearer to which the second notice is transmitted.

Alternatively, when the UL data occurs in the MAC, the terminal device 100 performs the random access procedure and enables the uplink transmission. The terminal device 100 performs, in advance, the SCG-synchronized reconfiguration that is not immediately performed.

With this configuration, when uplink transmission occurs in the RLC bearer on the SCG side in the SCG deactivating state, the terminal device 100 is able to perform an appropriate process. Furthermore, with this configuration, the terminal device 100 is able to notify the base station device 200 of occurrence of the uplink transmission in the RLC bearer on the SCG side in the SCG deactivating state or perform the SCG (re)activation autonomously or in accordance with an instruction given by the base station device 200.

### Other Embodiments

The embodiments as described above may be combined. Further, the messages in the sequence need not always transmitted and received in order as described above, but transmission/reception order may be changed. Furthermore, it may be possible not to transmit and receive a part of the messages in the sequence. For example, it is sufficient that the process performed by the terminal device 100 in the SCG deactivating state is performed when the terminal device 100 is in the SCG deactivating state, and transmission and reception of the messages in the sequence may be omitted.

Moreover, in each of the embodiments, the functions and the processes described as being implemented or performed by the terminal device 100 may be functions or processes that are implemented or performed by the base station device 200. Furthermore, in each of the embodiments, the functions and the processes described as being implemented or performed by the base station device 200 may be functions or processes that are implemented or performed by the terminal device 100.

Moreover, in each of the embodiments, the "radio bearer" may be a signaling radio bearer, a data radio bearer, or both of the signaling radio bearer and the data radio bearer.

Furthermore, in each of the embodiments, "A may be replaced with B" includes not only "A is replaced with B", but also "B is replaced with A".

Moreover, in each of the embodiments, when a condition "A" and a condition "B" contradict with each other, the condition "B" may be understood as a condition other than the condition "A".

Meanwhile, in each of the embodiments, examples of the terminal device and the base station device are described, but disclosed technology is not limited to the examples, and may be applied to various kinds of devices; for example, an electronic device mounted on a vehicle, a train, an airplane, an artificial satellite, or the like, an electronic device that is delivered by a drone or the like, a robot, AV equipment, home appliances, office equipment, a vending machine, or daily life equipment.

Furthermore, in each of the embodiments, the explanation has been given by using E-UTRA or NR as an example of a radio access technology, and an EPC or a 5GC as an example of the core network, but the disclosed technology is not limitedly applied to the radio access technology and the network as described above. For example, the disclosed technology may be applied to a radio access technology and the network of different generations, such as the sixth generation or the seventh generation.

Moreover, the drawings are referred to in relation to each of the embodiments, but specific configurations are not limited to the modes illustrated in the drawings.

In addition, the following Notes are disclosed in relation to each of the embodiments as described above.

(Note 1) A radio communication apparatus including:
a transmission unit that transmits a message to a different radio communication apparatus; and
a processing unit that performs a process on the message that is transmitted by the transmission unit, wherein
the processing unit, when including a first parameter in a first Radio Resource Control (RRC) message that is to be transmitted to the different radio communication apparatus and including a second parameter in a first Data Radio Bearer (DRB) configuration parameter that is included in the first RRC message, includes a third parameter in the first DRB configuration parameter.

(Note 2) A radio communication apparatus including:
a transmission unit a transmission unit that transmits a message to a different radio communication apparatus; and
a processing unit that performs a process on the message that is transmitted by the transmission unit, wherein
the processing unit, when including a second parameter in a first Data Radio Bearer (DRB) configuration parameter that is included in a first Radio Resource Control (RRC) message that is to be transmitted to the different radio communication apparatus, causes a secondary cell group that is configured in the different radio communication apparatus to enter an activate state.

(Note 3) A radio communication apparatus including:
a transmission unit a transmission unit that transmits a message to a different radio communication apparatus; and
a processing unit that performs a process on the message that is transmitted by the transmission unit, wherein
the processing unit, when including a first parameter in a first Radio Resource Control (RRC) message that is to be transmitted to the different radio communication apparatus, does not include a second parameter in a first Data Radio Bearer (DRB) configuration parameter that is included in the first RRC message.

(Note 4) The radio communication apparatus according to any of Notes 1 to 3, wherein
the first DRB configuration parameter is a configuration parameter for the first DRB that is established by the different radio communication apparatus, and
the first DRB includes configuration of a Packet Data Convergence Protocol (PDCP) status report transmission and is associated with a secondary cell group.

(Note 5) the radio communication apparatus according to Note 4, wherein the first parameter is a parameter indicating that the secondary cell group is caused to enter a deactivation state.

(Note 6) The radio communication apparatus according to Note 4, the second parameter is one of a parameter that instructs a PDCP entity corresponding to the first DRB to perform PDCP re-establishment and a parameter that instructs the PDCP entity corresponding to the first DRB to perform PDCP data recovery.

(Note 7) The radio communication apparatus according to Note 4, wherein the third parameter is a PDCP configuration parameter that does not include a parameter for configuring transmission of a PDCP status report.

(Note 8) A radio communication apparatus including
a reception unit that receives a message from a different radio communication apparatus; and
a processing unit that performs a process on the message that is received by the reception unit, wherein
the processing unit, when a first Radio Resource Control (RRC) message that is received from the different radio communication apparatus includes a first parameter and a first Data Radio Bearer (DRB) configuration parameter that is included in the first RRC message includes a second parameter, does not transmit a PDCP status report.

(Note 9) The radio communication apparatus according to Note 8, wherein
the first DRB configuration parameter is a configuration parameter for a first DRB that is established by the subject apparatus, and
the first DRB includes configuration of a Packet Data Convergence Protocol (PDCP) status report transmission and is associated with a secondary cell group.

(Note 10) A communication method implemented by a radio communication apparatus that transmits a message to a different radio communication apparatus, the communication method including:
including, when including a first parameter in a first Radio Resource Control (RRC) message that is to be transmitted to the different radio communication apparatus and including a second parameter in a first Data Radio Bearer (DRB) configuration parameter that is included in the first RRC message, a third parameter in the first DRB configuration parameter.

(Note 11) A communication program that causes a computer included in a radio communication apparatus that transmits a message to a different radio communication apparatus to perform a process comprising:
including, when including a first parameter in a first Radio Resource Control (RRC) message that is to be transmitted to the different radio communication apparatus and including a second parameter in a first Data Radio Bearer (DRB) configuration parameter that is included in the first RRC message, a third parameter in the first DRB configuration parameter.

### Reference Signs List

120, 220 storage
121, 221 radio communication program
122 terminal-side program
130, 230 memory
140, 240 radio communication circuit
222 base-station-side program
250 NI

## Claims

1. A radio communication apparatus comprising:
a transmission unit configured to transmit a message to a different radio communication apparatus; and
a processing unit configured to perform a process on the message that is transmitted by the transmission unit, wherein
the processing unit, when including a first parameter in a first Radio Resource Control (RRC) message that is to be transmitted to the different radio communication apparatus and including a second parameter in a first Data Radio Bearer (DRB) configuration parameter that is included in the first RRC message, includes a third parameter in the first DRB configuration parameter.

2. The radio communication apparatus according to claim 1, wherein
the first DRB configuration parameter is a configuration parameter for the first DRB that is established by the different radio communication apparatus, and
the first DRB includes configuration of a Packet Data Convergence Protocol (PDCP) status report transmission and is associated with a secondary cell group.

3. The radio communication apparatus according to claim 2, wherein the first parameter is a parameter indicating that the secondary cell group is caused to enter a deactivation state.

4. The radio communication apparatus according to claim 2, wherein the second parameter is one of a parameter that instructs a PDCP entity corresponding to the first DRB to perform PDCP re-establishment and a parameter that instructs the PDCP entity corresponding to the first DRB to perform PDCP data recovery.

5. The radio communication apparatus according to claim 2, wherein the third parameter is a PDCP configuration parameter that does not include a parameter for configuring transmission of a PDCP status report.

6. A radio communication apparatus comprising:
a reception unit configured to receive a message from a different radio communication apparatus; and
a processing unit configured to perform a process on the message that is received by the reception unit, wherein
the processing unit, when a first Radio Resource Control (RRC) message that is received from the different radio communication apparatus includes a first parameter and a first Data Radio Bearer (DRB) configuration parameter that is included in the first RRC message includes a second parameter, does not transmit a PDCP status report.

7. A communication method implemented by a radio communication apparatus that transmits a message to a different radio communication apparatus, the communication method comprising:
including, when including a first parameter in a first Radio Resource Control (RRC) message that is to be transmitted to the different radio communication apparatus and including a second parameter in a first Data Radio Bearer (DRB) configuration parameter that is included in the first RRC message, a third parameter in the first DRB configuration parameter.

8. A communication program that causes a computer included in a radio communication apparatus that transmits a message to a different radio communication apparatus to perform a execute comprising:
including, when including a first parameter in a first Radio Resource Control (RRC) message that is to be transmitted to the different radio communication apparatus and including a second parameter in a first Data Radio Bearer (DRB) configuration parameter that is included in the first RRC message, a third parameter in the first DRB configuration parameter.
